(19) Europäisches Patentamt
European Patent Office
Office européen des brevets

(11) **EP 4 675 550 A1**

(12) **EUROPEAN PATENT APPLICATION**

(43) Date of publication:
**07.01.2026   Bulletin 2026/02**

(21) Application number: **25185777.7**

(22) Date of filing: **27.06.2025**

(51) International Patent Classification (IPC):
***G06T 3/4053*** (2024.01)

(52) Cooperative Patent Classification (CPC):
**G06T 3/4053**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.07.2024   GB 202409480**

(71) Applicant: **Imagination Technologies Limited
Kings Langley, Hertfordshire WD4 8LZ (GB)**

(72) Inventors:
• **Chirkunov, Sergei**
**Hertfordshire, WD4 8LZ (GB)**
• **Imber, James Stuart**
**Hertfordshire, WD4 8LZ (GB)**
• **Heyward, Joseph**
**Hertfordshire, WD4 8LZ (GB)**
• **Huang, Zhuoyue**
**Hertfordshire, WD4 8LZ (GB)**

(74) Representative: **Slingsby Partners LLP
1 Kingsway
London WC2B 6AN (GB)**

(54) **UPSAMPLING**

(57)    A method and processing system are provided for applying upsampling to input pixel values of frames of a sequence of frames to determine upsampled pixel values at upsampled pixel locations for the frames of the sequence of frames. A jitter pattern is used over the sequence of frames, such that different frames of the sequence have input pixel values at locations corresponding to different upsampled pixel locations. For each of a plurality of the frames of the sequence of frames, when it is a current frame, input pixel values of the current frame are received. An initial block of upsampled pixel values is determined for the current frame, wherein the initial block of upsampled pixel values for the current frame comprises: (i) the input pixel values of the current frame at their upsampled pixel locations, and (ii) upsampled pixel values determined for the current frame at other upsampled pixel locations. An aligned block of upsampled pixel values for the current frame is determined based on the initial block of upsampled pixel values for the current frame in accordance with the jitter pattern. A block of refinement values to be applied to the initial block of upsampled pixel values is determined for the current frame, wherein said determining a block of refinement values comprises processing the aligned block of upsampled pixel values for the current frame using a set of one or more neural networks. The block of refinement values is applied to the initial block of upsampled pixel values for the current frame to determine a refined block of upsampled pixel values for the current frame. For one or more of the plurality of the frames of the sequence of frames, said determining an aligned block of upsampled pixel values comprises manipulating the initial block of upsampled pixel values for that frame in accordance with the jitter pattern, such that the input pixel values are located in the same positions within the aligned blocks of upsampled pixel values for all of the plurality of frames.

FIGURE 12

**Description**

CROSS-REFERENCE TO RELATED APPLICATION

This application claims priority from UK patent application 2409480.7 filed on 1 July 2024, which is herein incorporated by reference in its entirety.

TECHNICAL FIELD

The present disclosure is directed to upsampling. For example, upsampling can be applied to input pixel values of a current frame of a sequence of frames, e.g. using temporal resampling and/or spatial upsampling, to determine one or more upsampled pixel values, i.e. to determine one or more pixel values at a respective one or more upsampled pixel locations. The upsampling may be used for super resolution techniques.

BACKGROUND

The term 'super resolution' refers to techniques of upsampling an image that enhance the apparent visual quality of the image, e.g. by estimating the appearance of a higher resolution version of the image. When implementing super resolution, a system will attempt to find a higher resolution version of a lower resolution input image that is maximally plausible and consistent with the lower-resolution input image. Super resolution is a challenging problem because, for every patch in a lower-resolution input image, there is a very large number of potential higher-resolution patches that could correspond to it. In other words, super resolution techniques are trying to solve an ill-posed problem, since although solutions exist, they are not unique.

Super resolution has important applications. It can be used to increase the resolution of an image, thereby increasing the 'quality' of the image as perceived by a viewer. Furthermore, it can be used as a post-processing step in an image generation process, thereby allowing images to be generated at lower resolution (which is often simpler and faster) whilst still resulting in a high quality, high resolution image. An image generation process may be an image capturing process, e.g. using a camera. Alternatively, an image generation process may be an image rendering process in which a computer, e.g. a graphics processing unit (GPU), renders an image of a virtual scene. Compared to using a GPU to render a high resolution image directly, allowing a GPU to render a low resolution image and then applying a super resolution technique to upsample the rendered image to produce a high resolution image has potential to significantly reduce the latency, bandwidth, power consumption, silicon area and/or compute costs of the processing system. GPUs may implement any suitable rendering technique, such as rasterization or ray tracing. For example, a GPU can render a 960x540 image (i.e. an image with 518,400 pixels arranged into 960 columns and 540 rows) which can then be upsampled by a factor of 2 in both horizontal and vertical dimensions (which is referred to as '2x upsampling') to produce a 1920x1080 image (i.e. an image with 2,073,600 pixels arranged into 1920 columns and 1080 rows). In this way, in order to produce the 1920x1080 image, the GPU renders an image with a quarter of the number of pixels. This results in very significant savings (e.g. in terms of latency, power consumption and/or silicon area of the GPU) during rendering and can for example allow a processing system with a relatively low-performance GPU to render high-quality, high-resolution images within a low power and area budget, provided a suitably efficient and high-quality super-resolution implementation is used to perform the upsampling. In other examples, different upsampling factors (other than 2x) may be applied. A super resolution technique may be applied to a sequence of images (or frames), e.g. a sequence of frames from a video stream rendered by a graphics processing unit.

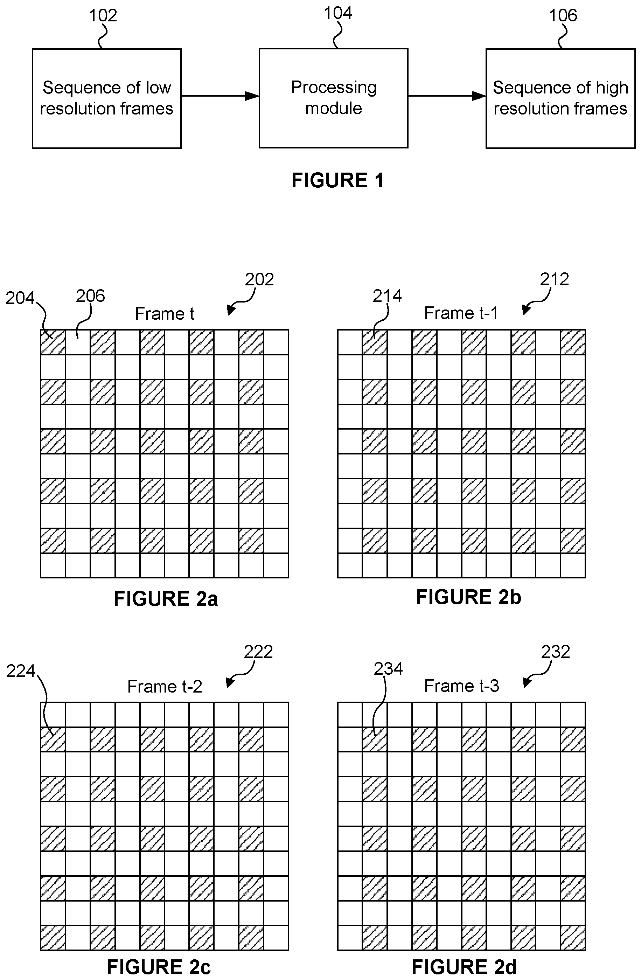

Figure 1 illustrates an upsampling process for applying upsampling to a sequence of frames. Each frame is an image. In particular, each frame is an image of a scene at a particular time instance. A sequence of frames 102, which have a relatively low resolution, is processed by a processing module 104 to produce a sequence of frames 106 which have a relatively high resolution. In some systems, the processing module 104 may be implemented as a neural network to upsample each of the input frames of the sequence of frames 102 to produce a respective output frame of the sequence of upsampled frames 106. Implementing the processing module 104 as a neural network may produce good quality output images, but often requires a high performance computing system (e.g. with large, powerful processing units and memories) to implement the neural network. As such, implementing the processing module 104 as a neural network for performing upsampling of frames may be unsuitable for reasons of processing time, latency, bandwidth, power consumption, memory usage, silicon area and compute costs. These considerations of efficiency are particularly important in some devices, e.g. small, battery operated devices with limited compute and bandwidth resources, such as mobile phones and tablets.

In some systems, where a sequence of frames from a video stream is available, higher quality results may be obtained by including samples from multiple input frames when producing each output frame. These methods are called Video Super-Resolution (VSR), and may be implemented using neural networks.

Some systems do not use a neural network for performing super resolution on frames, and instead use more conventional processing modules. For example, some systems split the problem of upsampling an image into two stages: (i) upsampling and (ii) adaptive sharpening. In these systems, the upsampling stage can be performed cheaply, e.g. using bilinear upsampling, and the adaptive sharpening stage can be used to sharpen the image, i.e. reduce the blurring introduced by the upsampling. Bilinear upsampling is known in the art and uses linear interpolation of adjacent input pixels in two dimensions to produce output pixels at positions between input pixels.

General aims for systems implementing super resolution for interactive-time or real-time applications are: (i) high quality output images, i.e. for the output images to be maximally plausible given the low resolution input images, (ii) low latency so that output images are generated quickly, (iii) a low cost processing module in terms of resources such as power, bandwidth and silicon area.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a method of applying upsampling to input pixel values of frames of a sequence of frames to determine upsampled pixel values at upsampled pixel locations for the frames of the sequence of frames, wherein a jitter pattern is used over the sequence of frames, such that different frames of the sequence have input pixel values at locations corresponding to different upsampled pixel locations, the method comprising:

for each of a plurality of the frames of the sequence of frames, when it is a current frame:

receiving input pixel values of the current frame;

determining an initial block of upsampled pixel values for the current frame,

wherein the initial block of upsampled pixel values for the current frame comprises: (i) the input pixel values of the current frame at their upsampled pixel locations, and (ii) upsampled pixel values determined for the current frame at other upsampled pixel locations;

determining an aligned block of upsampled pixel values for the current frame based on the initial block of upsampled pixel values for the current frame in accordance with the jitter pattern;

determining a block of refinement values to be applied to the initial block of upsampled pixel values for the current frame, wherein said determining a block of refinement values comprises processing the aligned block of upsampled pixel values for the current frame using a set of one or more neural networks; and

applying the block of refinement values to the initial block of upsampled pixel values for the current frame to determine a refined block of upsampled pixel values for the current frame;

wherein for one or more of the plurality of the frames of the sequence of frames, said

determining an aligned block of upsampled pixel values comprises manipulating the initial block of upsampled pixel values for that frame in accordance with the jitter pattern, such that the input pixel values are located in the same positions within the aligned blocks of upsampled pixel values for all of the plurality of frames.

Said manipulating the initial block of upsampled pixel values may comprise applying one or both of padding and cropping to the initial block of upsampled pixel values.

For one or more of the plurality of the frames of the sequence of frames, said applying one or both of padding and cropping to the initial block of upsampled pixel values for that frame may comprise applying both padding and cropping to the initial block of upsampled pixel values for that frame.

For one or more of the plurality of the frames of the sequence of frames, said applying one or both of padding and cropping to the initial block of upsampled pixel values for that frame may comprise applying only a first one of padding and cropping to the initial block of upsampled pixel values for that frame to determine the aligned block of upsampled pixel values for that frame. Said determining a block of refinement values may comprise applying a second one of padding and cropping to a result of processing the aligned block of upsampled pixel values for that frame using the set of one or more neural networks, wherein the first and second ones of padding and cropping are different.

Said applying padding to an initial block of upsampled pixel values may comprise adding a row and/or a column of upsampled pixel locations to the initial block of upsampled pixel values.

The values at the added row and/or a column of upsampled pixel locations may be either zeros or copies of upsampled pixel values at an adjacent row and/or column of upsampled pixel locations in the initial block of upsampled pixel values.

Said applying cropping to an initial block of upsampled pixel values may comprise removing a row and/or a column of upsampled pixel locations from the initial block of upsampled pixel values.

For said one or more of the plurality of the frames of the sequence of frames, said determining a block of refinement values may comprise manipulating a result of processing the aligned block of upsampled pixel values for that frame using the set of one or more neural networks, to counteract said manipulation of the initial block of upsampled pixel values that was performed when the aligned block of upsampled pixel values was determined for that frame.

Said manipulating the result of processing the aligned block of upsampled pixel values for that frame may comprise applying one or both of padding and cropping to the result of processing the aligned block of upsampled pixel values for that frame using the set of one or more neural networks, to counteract the one or both of padding and cropping that was applied when the aligned block of upsampled pixel values was determined for that frame.

The block of refinement values may be the same size and shape as the initial block of upsampled pixel values.

For each of the plurality of the frames of the sequence of frames, each 2x2 sub-block of upsampled pixel values in the initial block of upsampled pixel values may comprise one input pixel value and three other upsampled pixel values, and each 2x2 sub-block of upsampled pixel values in the aligned block of upsampled pixel values may comprise one input pixel value and three other upsampled pixel values. In accordance with the jitter pattern, the positions of the input pixel values within the 2x2 sub-blocks of upsampled pixel values in the initial block of upsampled pixel values may be different for different frames of the plurality of frames. Said manipulating the initial block of upsampled pixel values may be performed so that the positions of the input pixel values within the 2x2 sub-blocks of upsampled pixel values in the aligned block of upsampled pixel values are the same for all of the frames of the plurality of frames.

Said processing the aligned block of upsampled pixel values may comprise:

performing a space-to-depth process to divide the upsampled pixel values of the aligned block into a plurality of channels, wherein the input pixel values of the aligned block are grouped into a single one of the plurality of channels, and the upsampled pixel values of the aligned block which are not input pixel values are grouped into one or more other channels of the plurality of channels;

processing the upsampled pixel values of the aligned block in the plurality of channels with the set of one or more neural networks to determine a block of neural network output values in the plurality of channels; and

performing a depth-to-space process to interleave the neural network output values from the plurality of channels back into a single channel.

Said processing the aligned block of upsampled pixel values may comprise:

performing a convolution on the aligned block of upsampled pixel values;

processing a result of performing the convolution on the aligned block of upsampled pixel values with the set of one or more neural networks to determine a block of neural network output values; and

performing a deconvolution on the neural network output values to determine the block of refinement values.

The refinement values may be delta values. Said applying the block of refinement values to the initial block of upsampled pixel values may comprise adding the refinement values of the block of refinement values to the upsampled pixel values at corresponding locations of the initial block of upsampled pixel values.

The set of one or more neural networks may have been trained based on training blocks of upsampled pixel values having input pixel values located in said same positions within the training blocks.

The set of one or more neural networks may have been trained by:

for each of a plurality of the training blocks of upsampled pixel values:

processing the training block of upsampled pixel values using the set of one or more neural networks to determine a training block of refinement values to be applied to the training block of upsampled pixel values;

applying the training block of refinement values to the training block of upsampled pixel values to determine a refined training block of upsampled pixel values; and

comparing the refined training block of upsampled pixel values with a ground truth block of upsampled pixel values corresponding to the training block of upsampled pixel values to determine errors in the refined training block of upsampled pixel values;

wherein the determined errors may be used in a back-propagation process to update one or more parameters of the set of one or more neural networks.

The set of one or more neural networks may be a single neural network.

The set of one or more neural networks may comprise a first neural network and a second neural network, and said processing the aligned block of upsampled pixel values for the current frame using a set of one or more neural networks may comprise:

processing the aligned block of upsampled pixel values for the current frame using the first neural network to determine a block of initial refinement values;

processing the aligned block of upsampled pixel values for the current frame using the second neural network to determine a block of fine refinement values to be applied to the block of initial refinement values; and

applying the block of fine refinement values to the block of initial refinement values to determine the block of refinement values to be applied to the initial block of upsampled pixel values for the current frame.

Said determining an initial block of upsampled pixel values for the current frame may comprise determining said upsampled pixel values for the current frame at said other upsampled pixel locations.

Said determining said upsampled pixel values for the current frame at said other upsampled pixel locations may comprise:

obtaining pixel values of pixels of a reference frame of the sequence of frames;

for each of said other upsampled pixel locations:

obtaining a motion vector for the upsampled pixel location to indicate motion between the reference frame and the current frame for the upsampled pixel location;

using the motion vector for the upsampled pixel location to identify a plurality of the pixels of the reference frame;

determining a weight for each of the identified pixels of the reference frame; and

determining the upsampled pixel value for the upsampled pixel location using the determined weight for each of the identified pixels.

The reference frame may immediately precede the current frame in the sequence of frames. The refined block of upsampled pixel values that is determined for the current frame may be used for determining upsampled pixel values for the frame immediately following the current frame in the sequence of frames.

Said determining said upsampled pixel values for the current frame at said other upsampled pixel locations may further comprise:

obtaining depth values for locations of the pixels of the reference frame; and

for each of said other upsampled pixel locations, obtaining a depth value of the current frame for the upsampled pixel location;

wherein for each of said other upsampled pixel locations, the weight for each of the identified pixels of the reference frame may be determined in dependence on: (i) the depth value of the current frame for the upsampled pixel location, and (ii) the depth value for the location of the identified pixel of the reference frame.

Said determining said upsampled pixel values for the current frame at said other upsampled pixel locations may further comprise:

for each of said other upsampled pixel locations:

obtaining a plurality of input pixel values of the current frame for locations within a region surrounding the upsampled pixel location; and

determining a mean of the input pixel values of the current frame within the region surrounding the upsampled pixel location,

wherein for each of said other upsampled pixel locations, said determining the upsampled pixel value for the upsampled pixel location may comprise clamping the determined upsampled pixel value so that it does not differ from the determined mean of the input pixel values of the current frame within the region surrounding the upsampled pixel location by more than a threshold value.

Said determining said upsampled pixel values for the current frame at said other upsampled pixel locations may comprise applying spatial upsampling.

The method may further comprise outputting the determined refined block of upsampled pixel values for each of the plurality of frames.

The pixel values may be Y channel pixel values.

There is provided a processing system configured to apply upsampling to input pixel values of frames of a sequence of frames to determine upsampled pixel values at upsampled pixel locations for the frames of the sequence of frames, wherein a jitter pattern is used over the sequence of frames, such that different frames of the sequence have input pixel values at locations corresponding to different upsampled pixel locations, the processing system being configured to:

for each of a plurality of the frames of the sequence of frames, when it is a current frame:

receive input pixel values of the current frame;

determine an initial block of upsampled pixel values for the current frame, wherein the initial block of upsampled pixel values for the current frame comprises: (i) the input pixel values of the current frame at their upsampled pixel locations, and (ii) upsampled pixel values determined for the current frame at other upsampled pixel locations;

determine an aligned block of upsampled pixel values for the current frame based on the initial block of upsampled pixel values for the current frame in accordance with the jitter pattern;

determine a block of refinement values to be applied to the initial block of upsampled pixel values for the current frame, wherein said determining a block of refinement values comprises processing the aligned block of upsampled pixel values for the current frame using a set of one or more neural networks; and

apply the block of refinement values to the initial block of upsampled pixel values for the current frame to determine a refined block of upsampled pixel values for the current frame;

wherein for one or more of the plurality of the frames of the sequence of frames, said

determining an aligned block of upsampled pixel values comprises manipulating the initial block of upsampled pixel values for that frame in accordance with the jitter pattern, such that the input pixel values are located in the same positions within the aligned blocks of upsampled pixel values for all of the plurality of frames.

There may be provided a processing system configured to perform any of the methods described herein.

The processing system may be embodied in hardware on an integrated circuit.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a processing system as described herein.

The processing systems described herein may be embodied in hardware on an integrated circuit. There may be provided a method of manufacturing, at an integrated circuit manufacturing system, a processing system. There may be provided an integrated circuit definition dataset that, when processed in an integrated circuit manufacturing system, configures the system to manufacture a processing system. There may be provided a non-transitory computer readable storage medium having stored thereon a computer readable description of a processing system that, when processed in an integrated circuit manufacturing system, causes the integrated circuit manufacturing system to manufacture an integrated circuit embodying a processing system.

There may be provided an integrated circuit manufacturing system comprising: a non-transitory computer readable storage medium having stored thereon a computer readable description of the processing system; a layout processing system configured to process the computer readable description so as to generate a circuit layout description of an integrated circuit embodying the processing system; and an integrated circuit generation system configured to manufacture the processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 illustrates an upsampling process;

Figure 2a shows input pixels of a current frame (a $t^{th}$ frame) of a sequence of frames;

Figure 2b shows input pixels of a $(t-1)^{th}$ frame of the sequence of frames;

Figure 2c shows input pixels of a $(t-2)^{th}$ frame of the sequence of frames;

Figure 2d shows input pixels of a $(t-3)^{th}$ frame of the sequence of frames;

Figure 3 shows a processing system configured to apply upsampling to input pixel values of frames of a sequence of frames to determine upsampled pixel values at upsampled pixel locations for the frames of the sequence of frames;

Figure 4 is a flow chart for a method of applying upsampling to input pixel values of frames of a sequence of frames to determine upsampled pixel values at upsampled pixel locations for the frames of the sequence of frames;

Figure 5 illustrates an example of an implementation of the processing system shown in Figure 3;

Figure 6 illustrates pixel values of a sequence of frames indicating how upsampled pixel locations can be projected to locations in a reference frame;

Figure 7 is a flow chart showing an example of a method of determining an initial block of upsampled pixel values for a current frame;

Figure 8 illustrates upsampled pixel locations of a current frame and the projection of an upsampled pixel location of the current frame to a location in a reference frame;

Figure 9 shows a graph illustrating a linear relationship and a Gaussian relationship for mapping distances between the projected location and the locations of the pixels in the reference frame to initial weights for use in determining the upsampled pixel value for the upsampled pixel location;

Figure 10 shows a graph illustrating clamping of the determined upsampled pixel values;

Figure 11 shows three versions of a portion of an upsampled frame: (i) a ground truth version, (ii) a version in which history rectification has been applied to the upsampled pixel values, and (iii) a version in which history rectification has not been applied to the upsampled pixel values;

Figure 12 shows an example in which padding and cropping is applied to initial blocks of upsampled pixel values for four frames to determine the aligned blocks of upsampled pixel values;

Figure 13 shows an example in which (only) padding is applied to initial blocks of upsampled pixel values for four frames to determine the aligned blocks of upsampled pixel values;

Figure 14 shows an example in which (only) cropping is applied to initial blocks of upsampled pixel values for four frames to determine the aligned blocks of upsampled pixel values;

Figure 15a illustrates a space-to-depth process;

Figure 15b illustrates a depth-to-space process;

Figure 16 shows a set of neural networks comprising a first neural network and a second neural network for processing aligned blocks of upsampled pixel values;

Figure 17 shows a computer system in which a processing system is implemented; and

Figure 18 shows an integrated circuit manufacturing system for generating an integrated circuit embodying a processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only. In examples described herein upsampling can be applied to input pixel values of a current frame of a sequence of frames to determine upsampled pixel values at upsampled pixel locations for the current frame. The upsampling may, for example, use a temporal resampling approach and/or a spatial upsampling approach to determine the upsampled pixel values. A jitter pattern is used over the sequence of frames, such that different frames of the sequence have input pixel values at locations corresponding to different upsampled pixel locations. For example, over a set of $x$ consecutive frames of the sequence an input pixel value (which may be referred to as a 'ground truth' pixel value) may be received for each upsampled pixel location. For example, $x$ may be four. In this way, the use of the jitter pattern allows every upsampled pixel location to be 'refreshed' (by receiving an input pixel value for that location) at least once for every set of $x$ consecutive frames of the sequence. The use of the jitter pattern provides a higher sampling density, particularly for static and slow-moving cameras (i.e. viewpoints of the scene) and scenes. Furthermore, the use of the jitter pattern is particularly useful when a temporal resampling approach is used to determine the upsampled pixel values because it reduces the persistence of errors over sequences of frames (that is, each pixel will be refreshed every $x$ frames, reducing the likelihood of stale data).

In other examples, it might not be the case that over a set of $x$ consecutive frames of the sequence an input pixel value is received for every upsampled pixel location. For example, over a set of $x$ consecutive frames of the sequence an input pixel value may be received for a subset of the upsampled pixel locations, e.g. for upsampled pixel locations forming a quincunx (chequerboard) pattern, wherein an upsampling process (e.g.

spatial upsampling) may be performed to determine upsampled pixel values at the upsampled pixel locations for which an input pixel value has not been received in the set of *x* consecutive frames of the sequence.

In cases where the camera and scene are static, there is relatively little to be gained from refining the resampled pixels. However, temporal resampling of pixels when the camera and/or scene are moving will result in errors such as crenulation artefacts and aliasing. Methods described herein reduce the appearance of such artefacts to improve the quality of output sequences. As such, in examples described herein, once upsampled pixel values have been determined for a current frame, refinements can be applied to the upsampled pixel values. In particular, the upsampled pixel values may be determined for the current frame using a classical approach, e.g. on a Graphics Processing Unit (GPU) by applying temporal resampling and/or spatial upsampling, without using a neural network, and then the refinements to be applied to the determined upsampled pixel values can be determined using a set of one or more neural networks, e.g. implemented on the GPU or on a (dedicated) neural network accelerator (NNA). Since the set of one or more neural networks are used just to refine an initial block of upsampled pixel values (which has been determined without using a neural network), the neural network(s) of the examples described herein can be much smaller than systems in which a large neural network is used to implement the whole upsampling process. In particular, the systems described herein in which a set of one or more neural networks is used to refine an initial block of upsampled pixel values which has been determined without using a neural network (e.g. on a GPU) produce good quality output images, whilst also providing an efficient processing system in terms of providing low processing time, latency, bandwidth, power consumption, memory usage, silicon area and/or compute costs. In other words, the systems described herein have been determined to be a good trade-off between quality and cost for real-time applications on resource-limited systems where both rendering acceleration hardware (e.g. a GPU) and neural network acceleration hardware (e.g. either on a GPU or an NNA) is available.

The set of one or more neural networks is used to process the initial blocks of upsampled pixel values to determine the refinements to be applied to the initial blocks of upsampled pixel values. The initial blocks of upsampled pixel values include some input pixel values and some upsampled pixel values that have been determined, e.g. by performing temporal resampling and/or spatial upsampling. The characteristics of optimal refinements to be applied to the input pixel values of the initial blocks may be significantly different to the characteristics of optimal refinements to be applied to the other upsampled pixel values in the initial blocks. However, due to the jitter pattern that is used over the sequence of frames, the initial blocks of upsampled pixel values for different frames include input pixel values at different locations. As such it is not trivial for the neural network(s) to be configured to apply the optimal refinements to the different types of pixel values (i.e. to input pixel values and to other upsampled pixel values) in the initial blocks. In examples described herein, the initial blocks of upsampled pixel values are manipulated in accordance with the jitter pattern to determine aligned blocks of upsampled pixel values, such that the input pixel values are located in the same positions within the aligned blocks of upsampled pixel values for all of the frames. The 'manipulation' of a block of values may comprise: (i) shifting the positions of the values up, down, left and/or right within the block, and/or (ii) adding and/or removing one or more columns and/or one or more rows of values to/from the block. In particular, in examples described herein, one or both of padding and cropping is applied to the initial block of upsampled pixel values to determine the aligned blocks of upsampled pixel values. The aligned block of upsampled pixel values can then be processed with the neural network(s) to determine a block of refinement values to be applied to the initial block of upsampled pixel values. Since the aligned blocks of upsampled pixel values have the input pixel values located in the same positions for all of the frames, the neural network(s) apply the same weights to the input values in all of the frames, so the neural network(s) can be trained to process the aligned blocks of upsampled pixel values more optimally than they could be trained to process the initial blocks of upsampled pixel values. That is, the neural networks can be trained to apply suitable processing to the input pixel values and suitable processing to the other upsampled pixel values in the aligned blocks of upsampled pixel values in accordance with their different characteristics. As such, by configuring the processing system so that the neural network(s) process the aligned blocks of upsampled pixel values, rather than the initial blocks of upsampled pixel values, the resulting refined upsampled pixel values can be of a higher quality (i.e. have a higher level of plausibility given the low resolution input images), and this is achieved without significantly increasing the complexity, latency, power consumption or silicon area of the processing system.

The sequence of frames comprises frames at respective time instances. Figures 2a, 2b, 2c and 2d show input pixels of a current frame ("frame t") 202 and input pixels of three immediately preceding frames ("frame t-1", "frame t-2" and "frame t-3") 212, 222 and 232 within a sequence of frames. The (low resolution) input pixels are shown with diagonal hatching in Figure 2. The squares in Figure 2 which are shown without hatching represent upsampled pixel locations for which upsampled pixel values are to be determined. It can be seen that in the example shown in Figures 2a to 2d, the upsampling will double the resolution, i.e. the number of rows of pixels will be doubled and the number of columns of pixels will be doubled, such that each 2x2 block of upsampled pixel locations comprises the location of one input pixel. Figures 2a to 2d show an example in which a jitter pattern is used over the sequence of frames, such that the different frames have input pixel values at locations corresponding to different upsampled pixel locations (it will be understood that the method described herein can be applied to other jitter patterns). In particular, frame t 202 has input pixel values (shown with diagonal hatching) at the intersections of odd rows and odd columns, e.g. the input pixel value 204 at the intersection of the first row and the first column and then other input pixel values are in alternate rows and alternate columns from the location of the input pixel value 204; frame t-1 212 has input pixel values (shown with diagonal hatching) at the intersections of odd rows and even columns, e.g. the input pixel value 214 at the intersection of the first row and the second column and then other input pixel values are in alternate rows and alternate columns from the location of the input pixel value 214; frame t-2 222 has input pixel values (shown with diagonal hatching) at the intersections of even rows and odd columns, e.g. the input pixel value 224 at the intersection of the second row and the first column and then other input pixel values are in alternate rows and alternate columns from the location of the input pixel value 224; and frame t-3 232 has input pixel values (shown with diagonal hatching) at the intersections of even rows and even columns, e.g. the input pixel value 234 at the intersection of the second row and the second column and then other input pixel values are in alternate rows and alternate columns from the location of the input pixel value 234. In this example, frame t-4 (i.e. the frame preceding frame t-3 in the sequence) would have input pixel values in the same positions as frame t 202. It can be seen that, due to the jitter pattern, the upsampled pixel locations for which consecutive frames of the sequence have input pixel values are shifted relative to each other. Often, the content represented by frames of a sequence of frames (e.g. a video stream) does not change significantly from one frame to the next. For example, the pixel value of frame t 202 at the upsampled pixel location 206 is likely to be similar to the input pixel value 214 of frame t-1 212 at the corresponding location (i.e. in the top row and in the second-to-leftmost column). As described in more detail below, when a temporal resampling technique is used, a motion vector can be used to project the upsampled pixel location 206 from the current frame 202 to a projected location in a reference frame (e.g. frame t-1 212), and the pixel values of the reference frame can be used to estimate an upsampled pixel value at the upsampled pixel location 206. This estimation process is "temporal resampling", and examples for performing temporal resampling are described herein. In general, there may be one or more reference frames, and each reference frame may be a previous frame or a later frame relative to the current frame in the sequence of frames.

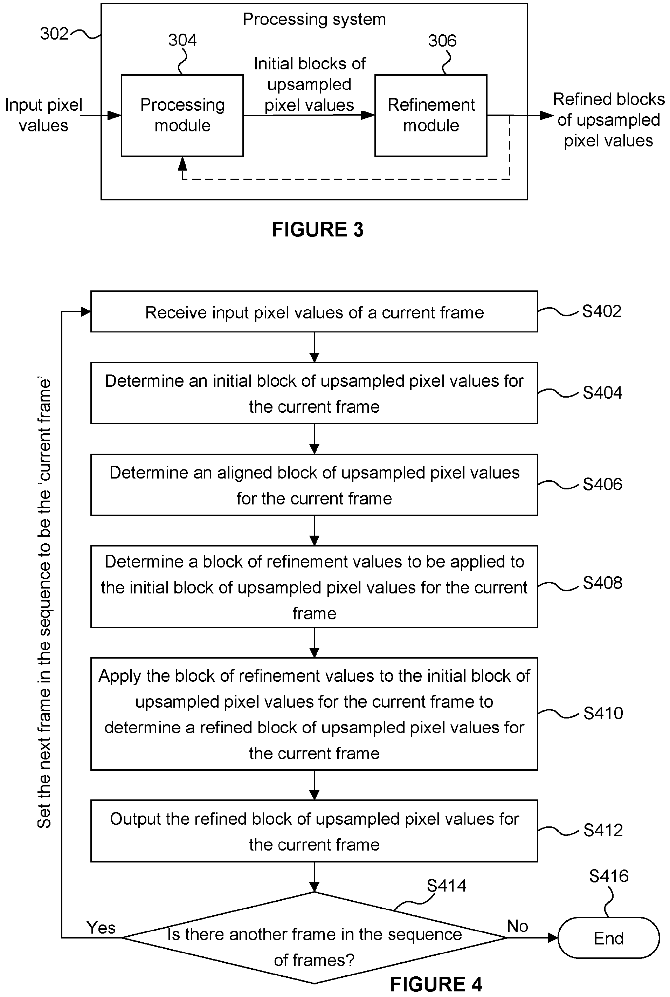

Figure 3 shows a processing system 302 configured to apply upsampling to input pixel values of frames of a sequence of frames to determine upsampled pixel values at upsampled pixel locations for the frames of the sequence of frames. The processing system 302 comprises a processing module 304 (which may be similar to the processing module 104 shown in Figure 1) and a refinement module 306. The processing module 304 and the refinement module 306 may each be implemented in hardware, software, or a combination thereof. The processing module 304 and the refinement module 306 may be implemented on the same processing unit, e.g. on a Graphics Processing Unit (GPU). Alternatively, the processing module 304 and the refinement module 306 may be implemented on different processing units within the processing system 302, wherein the different processing units can communicate with each other via a bus within the processing system 302. For example, the processing module 304 may be implemented on a GPU and the refinement module 306 may be implemented on a Neural Network Accelerator (NNA) within the processing system 302.

The format of the pixel values could be different in different examples. For example, the pixel values could be in YUV format (in which each pixel has a value in each of Y, U and V channels), and upsampling may be applied to each of the Y, U and V channels separately. The upsampling described herein may be applied to just the Y channel (i.e. the pixel values may be Y channel pixel values) with the upsampling of the U and V channels being performed in a simpler manner, e.g. using bilinear interpolation on the U and V channels of the input pixel values in the current frame (e.g. frame t). In other examples, the upsampling described herein may be applied to each of the Y, U and V channels. The human visual system is not as perceptive to spatial resolution in the U and V channels as in the Y channel, so it may be beneficial to use a simpler upsampling technique (e.g. bilinear upsampling) for the U and V channels, whilst the more complex upsampling techniques described herein (which can provide upsampled images with less blurring and/or other artefacts) may be used for the Y channel. If the input pixel data is in RGB format then it could be converted into YUV format (e.g. using a known colour space conversion technique) and then processed as data in Y, U and V channels. Alternatively, if the input pixel data is in RGB format (in which each pixel has a value in each of R, G and B channels) then the techniques described herein could be implemented on the R, G and B channels as described herein, wherein the G channel may be considered to be a proxy for the Y channel. If the input data includes an alpha channel then upsampling (e.g. using bilinear interpolation) may be applied to the alpha channel separately.

Figure 4 is a flow chart for a method of applying upsampling to input pixel values of frames of a sequence of frames to determine upsampled pixel values at upsampled pixel locations for the frames of the sequence of frames. The input pixel values of the frames of the sequence of frames may be determined by a graphics rendering process, e.g. implemented on a GPU. The graphics rendering process could be any suitable known type of graphics rendering process, e.g. a rasterisation process or a ray tracing process.

In step S402 the processing system 302 (in particular the processing module 304) receives input pixel values of a current frame, e.g. frame t 202.

In step S404 the processing system (in particular the processing module 304) determines an initial block of upsampled pixel values for the current frame. The initial block of upsampled pixel values may represent the whole of the current frame. The initial block of upsampled pixel values for the current frame comprises: (i) the input pixel values of the current frame at their upsampled pixel locations, and (ii) upsampled pixel values determined for the current frame at other upsampled pixel locations, e.g. by temporal resampling of the refinement module 306 output from the previous timestep. The determination of the initial block of upsampled pixel values for the current frame may comprise the processing module 304 determining the upsampled pixel values for the current frame at the other upsampled pixel locations. The 'other upsampled pixel locations' are the upsampled pixel locations for which input pixel values are not received for the current frame. The initial block of upsampled pixel values that is determined for the current frame in step S404 may be determined using any suitable upsampling technique, e.g. using a temporal resampling approach and/or a spatial upsampling approach, e.g. using a temporal resampling approach using the high-resolution output of the refinement module 306 from the previous timestep as a reference frame, and/or a spatial upsampling (or interpolation) approach based on the input pixels from the current frame. In examples described herein the processing module 304 does not use a neural network to determine the initial block of upsampled pixel values for the current frame in step S404.

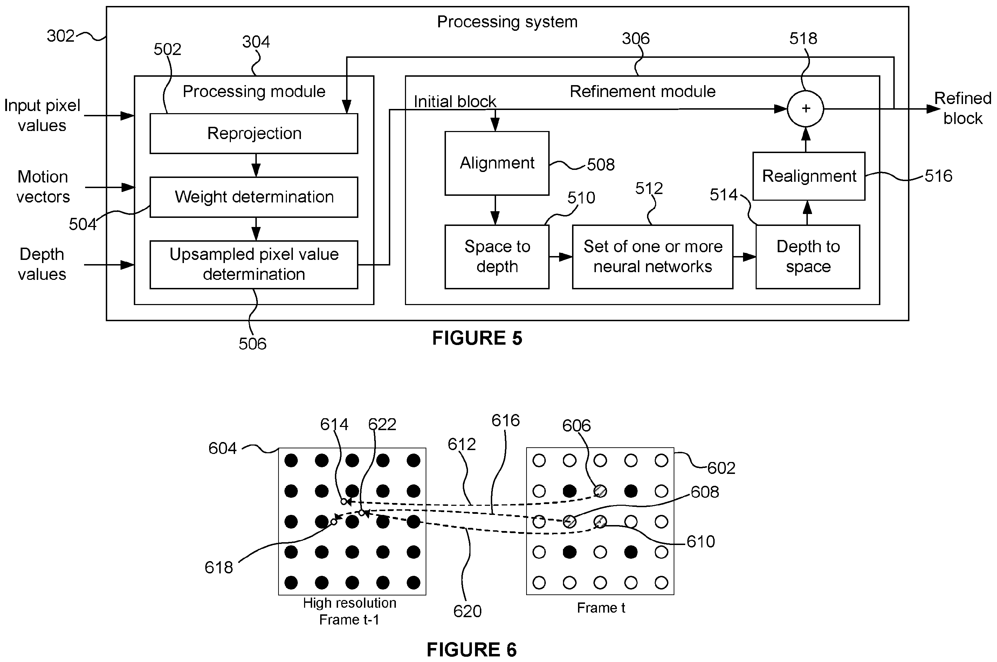

Figure 5 illustrates an example of an implementation of the processing system 302. In this example, the processing module 304 is configured to use a temporal resampling technique to determine the initial block of upsampled pixel values for the current frame in step S404, as described in detail below with reference to Figures 6 to 11b. In this example, the processing module 304 comprises reprojection logic 502, weight determination logic 504 and upsampled pixel value determination logic 506. As described above, the processing module 304 is arranged to receive input pixel values for the frames of the sequence of frames. The processing module 304 is also arranged to receive motion vectors and depth values for the upsampled pixel locations of the upsampled pixel values for the frames of the sequence of frames. The input pixel values, the motion vectors and the depth values may be determined using known techniques by a graphics rendering process, e.g. implemented on a GPU, and provided to the processing module 304. The depth values and/or motion vector values may be determined at a subset (e.g. a quarter) of the upsampled pixel locations for the input frame, and/or at the upsampled pixel locations for the reference frame. In particular, depth for both the input and reference frames may be determined. It is noted that in these examples the graphics rendering process may determine depth values and motion vectors at more locations than the locations at which it determines pixel values (e.g. depth values and motion vectors may be rendered at each of the upsampled pixel locations for the reference frame, whereas input pixel values may be rendered at a subset, e.g. a quarter, of the upsampled pixel locations). Determining only the depth values and motion vectors (and not pixel values) at particular locations is significantly simpler for the graphics rendering process (and can be performed with a reduced latency and/or reduced power consumption) compared to determining the depth values, motion vectors and the pixel values at those particular locations. When processing the current frame, the depth values at the upsampled pixel locations for the reference frame may be rendered and passed in along with the depth values for the current frame, or they may be maintained by temporal resampling.

In the example shown in Figure 5, the refinement module 306 comprises alignment logic 508, space-to-depth logic 510, a set of one or more neural networks 512, depth-to-space logic 514, realignment logic 516 and combining logic 518.

Figure 6 illustrates pixel values of a current frame 602 ("frame t") and upsampled pixel values that were determined for the previous frame 604 (frame t-1) in the sequence of frames. Frame t-1 604 is used as a reference frame for determining upsampled pixel values for frame t 602. It is noted that in this example the reference frame is a high resolution image and has pixel values for all of the upsampled pixel locations at the previous timestep (i.e. at the time corresponding to the previous frame). In this example, a graphics rendering process renders a quarter of the upsampled pixel values. In particular, the rendered pixel values (i.e. the input pixel values) of the current frame 602 are represented with solid circles in Figure 6. In this example, temporal resampling is used to determine the upsampled pixel values for the other three quarters of the upsampled pixel locations of the current frame 602 (which are shown as empty circles or circles with hatching in Figure 6). Figure 6 illustrates how three of the upsampled pixel values (606, 608 and 610) can be determined using temporal resampling. In the example shown in Figure 6, for each of the upsampled pixel values, a motion vector is obtained which can be used to project the location of that upsampled pixel value to a projected location in the reference frame 604. Specifically, a motion vector 612 is used to project the upsampled pixel location 606 of the current frame 602 to a projected location 614 of the reference frame 604; a motion vector 616 is used to project the upsampled pixel location 608 of the current frame 602 to a projected location 618 of the reference frame 604; and a motion vector 620 is used to project the upsampled pixel location 610 of the current frame 602 to a projected location 622 of the reference frame 604. The processing module 304 can determine the upsampled pixel values at the locations 606, 608 and 610 based on their respective projected locations 614, 618 and 622 in the reference frame 604.

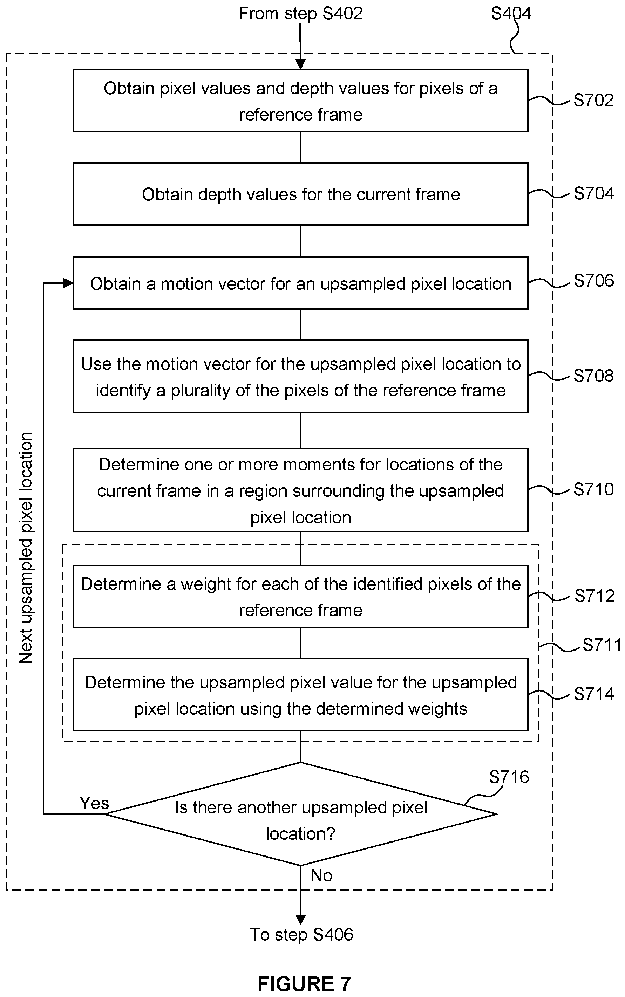

In particular, Figure 7 is a flow chart showing an example of how step S404 can be performed to determine an initial block of upsampled pixel values for the current frame. In step S702 the processing module 304 obtains pixel values of pixels of the reference frame 604. For example, the pixel values of the previous frame (frame t-1) in the sequence of frames that were determined in a previous iteration may be received at the processing module 304 in step S702. Furthermore, in step S702 the processing module 304 may also obtain depth values of pixels of the reference frame 604. These depth values may have been received at the processing module 304 in the previous iteration (performed for frame t-1) and stored in the processing module 304 for use in the current iteration (performed for frame t). A depth value for a pixel represents a distance from a viewpoint for the frame to a visible surface in the scene represented by the pixel in the frame. As described above, pixel values and depth values are obtained for each of the upsampled pixel locations of the reference frame 604. The depth values of the reference frame may for example be obtained by:

- Rendering a cheap, high-resolution depth image for the previous frame; or

- Tracking depth across time in the temporal resampling process. For example, when the initial block of upsampled pixel values is determined for the current frame, depth can be treated as an additional channel. The depth values at the input pixel locations can then be updated with the corresponding depth values from the current frame. This depth can then be stored as the depth for the reference frame for the next timestep.

In step S704 the processing module 304 obtains depth values for the current frame 602. It is noted that in step S402 the processing module 304 has received the input pixel values of the current frame. Steps S402, S702 and S704 may be performed in any order, or two or more of the steps may be performed in parallel in different examples. As described above, the pixel values and the depth values of the current frame 602 and of the reference frame 604 may be determined by a graphics rendering process. The graphics rendering process could be any suitable known type of graphics rendering process, e.g. a rasterisation process or a ray tracing process.

A pixel value and a depth value may be obtained in step S702 for each upsampled pixel location of the reference frame 604. Similarly, a depth value for the current frame may be obtained in step S704 for each upsampled pixel location. However, the input pixel values received in step S402 are just at a subset (e.g. a quarter) of the upsampled pixel locations. In other words, the input pixel values represent the current frame at a low resolution.

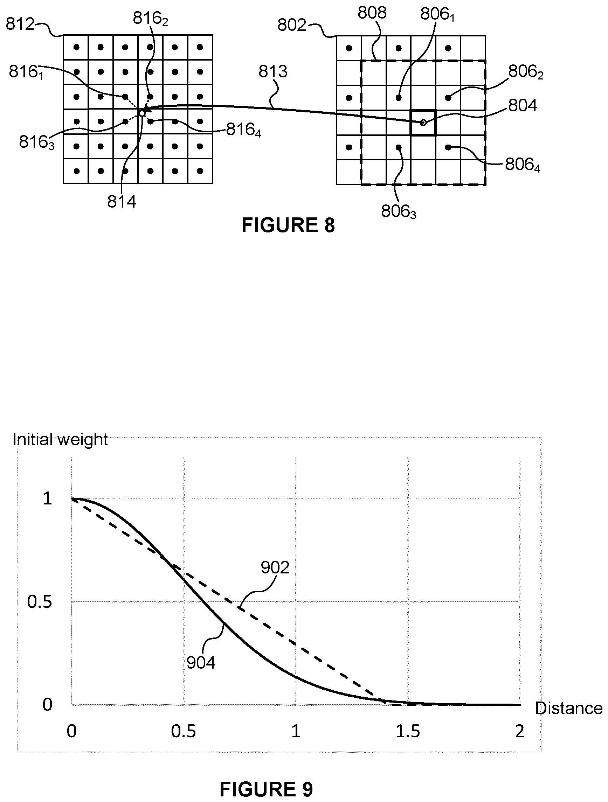

Figure 8 illustrates upsampled pixel locations of the current frame (denoted 802 in Figure 8), indicating the upsampled pixel locations for which input pixel values are received in step S402. In particular, the solid circles of the current frame 802 indicate upsampled pixel locations for which input pixel values are received in step S402. Each of the squares represents an upsampled pixel location, and in this example a depth value is obtained for each of the upsampled pixel locations of the current frame 802 in step S704.

Figure 8 also illustrates a projection of the upsampled pixel location 804 of the current frame 802 to a location 814 in the reference frame 812. In step S706 the processing module 304 (in particular the reprojection logic 502) obtains a motion vector 813 for the upsampled pixel location 804 to indicate motion between the reference frame 812 and the current frame 802 for the upsampled pixel location 804. In examples described herein, the motion vector 813 is a backwards motion vector. More generally, the motion vector 813 may be a forwards or a backwards motion vector (or a combination, e.g. an average, of a forwards and a backwards motion vector). A forwards motion vector represents motion from an earlier frame (e.g. the reference frame 812) to a later frame (e.g. the current frame 802); whereas, a backwards motion vector represents motion from a later frame (e.g. the current frame 802) to an earlier frame (e.g. the reference frame 812). In some examples, a respective motion vector is obtained for each upsampled pixel location of the current frame for which an upsampled pixel value is to be determined; whereas in other examples a motion vector may be shared by multiple neighbouring upsampled pixel locations.

The term "obtaining" is used herein such that "obtaining" a value may refer to "determining" the value or "receiving" the value. As an example, the motion vector 813 may be determined during a graphics rendering process performed by a graphics processing unit that provided the pixel values and depth values, and step S706 may involve the processing module 304 receiving the motion vector 813 from the graphics processing unit. In alternative examples, the processing module 304 may determine the motion vector 813 itself based on the pixel values (and optionally the depth values) of the reference frame 812 and the current frame 802. Techniques for determining motion vectors are known in the art, and any suitable technique could be used in the examples described herein. For example, the position of each vertex in the scene may be computed in both the current frame and the previous frame (e.g. in a programmable vertex shader), and the difference between the two positions can be found. Alternatively, motion vectors may be obtained by comparing the frames themselves, for example using dense optical flow algorithms which determine motion from pixel values using any suitable known technique. The motion vector 813 may represent motion of objects within a scene being rendered between the time instances corresponding to the reference frame 812 and the current frame 802. However, in some cases, rather than representing the actual motion of objects in a scene, the motion vector 813 may point to a location in the reference frame 812 that provides a best match (according to any suitable metric) to the upsampled pixel location 804 in the current frame 802, whether or not that corresponds to any actual motion of an object in the scene.

In step S708 the processing module 304 (in particular the reprojection logic 502) uses the motion vector 813 for the upsampled pixel location 804 to identify a plurality of the pixels of the reference frame 812. In particular, the upsampled pixel location 804 is projected to a location 814 in the reference frame 812 based on the motion vector 813, and a plurality of pixels of the reference frame are identified in the vicinity of the projected location in the reference frame. For example, the four pixels ($816_1$, $816_2$, $816_3$ and $816_4$) of the reference frame 812 that are the closest to the projected location 814 may be identified. In other examples, more than four pixels of the reference frame may be identified, e.g. a 3x3 or 4x4 block of pixels of the reference frame around the projected location may be identified.

In step S710 the processing module 304 (e.g. the weight determination logic 504) determines one or more moments (i.e. statistics) for locations of the current frame in a region surrounding an upsampled pixel location. The moments may include a mean and/or a standard deviation, and may be moments relating to the depth values and/or to the pixel values for the locations of the current frame in a region surrounding the upsampled pixel location. In other examples, the moments may include a variance and/or a range. In the example shown in Figure 8, a region 808 (shown with a dashed line) surrounds the upsampled pixel location 804. In this example the region 808 is a 5x5 region of upsampled pixel locations, such that it includes 25 upsampled pixel locations. Within the region 808 there are four input pixels of the current frame ($806_1$, $806_2$, $806_3$ and $806_4$) for which input pixel values are received in step S402. Within the region 808 there are 25 locations for which depth values are obtained for the current frame, i.e. a depth value is obtained for each of the upsampled pixel locations in the region 808. In other examples, the region may be a different size and/or shape, e.g. the region may be a 3x3 region centred on the upsampled pixel location 804.

The mean of the depth values ($\mu_{depth}$) may be calculated as $\mu_{depth} = \frac{1}{N_D} \sum_{i=1}^{N_D} D_i$ , where $D_i$ are the depth values of the current frame 802 obtained within the region 808 and $N_D$ is the number of depth values that are obtained within the region 808. The standard deviation of the depth values ($\sigma_{depth}$) may be calculated as

$$\sigma_{depth} = \sqrt{\left(\frac{1}{N_D} \sum_{i=1}^{N_D} D_i^2\right) - \mu_{depth}^2}$$ . In alternative examples the standard deviation of the depth values ($\sigma_{depth}$) may be calculated as $\sigma_{depth} =$

$$\sqrt{\frac{1}{N_D} \sum_{i=1}^{N_D} \left(D_i - \mu_{depth}\right)^2}$$ . With reference to the example shown in Figure 8, $N_D$ = 25 because there are 25 locations for which depth values are obtained within the region 808. In other examples, $N_D$ may be different if the region 808 includes a different number of locations for which depth values are obtained.

The mean of the pixel values ($\mu_{pixel}$) may be calculated as $\mu_{pixel} = \frac{1}{N_{pixel}} \sum_{i=1}^{N_{pixel}} x_i$ , where $x_i$ are the pixel values (e.g. Y channel values) of the current frame 802 obtained within the region 808 and $N_{pixel}$ is the number of pixel values that are obtained within the region 808. The standard deviation of the pixel values ($\sigma_{pixel}$) may be calculated as

$$\sigma_{pixel} = \sqrt{\left(\frac{1}{N_{pixel}} \sum_{i=1}^{N_{pixel}} x_i^2\right) - \mu_{pixel}^2}$$ . In alternative examples the standard deviation of the pixel values ($\sigma_{pixel}$) may be calculated as

$$\sigma_{pixel} = \sqrt{\frac{1}{N_{pixel}} \sum_{i=1}^{N_{pixel}} \left(x_i - \mu_{pixel}\right)^2}$$ . With reference to the example shown in Figure 8, $N_{pixel}$ = 4 because there are four locations for which pixel values are obtained within the region 808. In other examples, $N_{pixel}$ may be different if the region 808 includes a different number of locations for which pixel values are obtained.

Figure 7 shows a dashed box representing step S711 in which the processing module 304 combines the pixel values of the identified pixels 816 of the reference frame 812 to determine an upsampled pixel value for the upsampled pixel location 804. In simple examples, step S711 may involve performing bilinear interpolation of the identified pixels 816 of the reference frame. However, in other examples, such as the example shown in Figure 7, step S711 comprises steps S712 and S714.

In step S712 the processing module 304 (in particular the weight determination logic 504) determines a weight for each of the identified pixels 816 of the reference frame 812; and in step S714 the processing module 304 (in particular the upsampled pixel value determination logic 506) determines the upsampled pixel value for the upsampled pixel location 804 using the determined weight for each of the identified pixels 816. For example, step S714 may involve performing a weighted sum of the pixel values of the identified pixels 816 of the reference frame 812 using the determined weight for each of the identified pixels in the weighted sum. In this way, in step S714 the pixel values of the identified pixels 816 of the reference frame 812 are merged using their determined weights to determine the upsampled pixel value for the upsampled pixel location 804.

The determination of a weight for an identified pixel 816 in step S712 may be performed in multiple steps. For example, an initial weight for an identified pixel may be determined and then the initial weight may be used (or 'refined') to determine the (final) weight for the identified pixel of the reference frame. For example, an initial weight for each of the identified pixels ($816_1$ to $816_4$) of the reference frame 812 may be determined by determining a distance between the projected location 814 and the location of the identified pixel 816 in the reference frame 812, and then mapping the distance to an initial weight using a predetermined relationship. The distances are shown with dotted lines in Figure 8. The distances may be any suitable measure of distance, e.g. L2 distances, squared L2 distances or L1 distances. In general, the initial weights may be determined using either linear or non-linear functions, or with machine learning methods (e.g. using a neural network to compute the weights).

The predetermined relationship which is used to map the distances to the initial weights may be any suitable relationship, e.g. a relationship defined by a function that decreases monotonically with distance and provides positive values in a range of distances from 0 to $\sqrt{2}$, such as a Gaussian relationship, a linear relationship or a relationship defined by a suitable cosine function. Figure 9 shows a graph illustrating a linear relationship (with the dashed line 902) and a Gaussian relationship (with the solid line 904) for mapping distances between the projected location and the locations of the pixels in the reference frame to initial weights for use in determining the upsampled pixel value for the upsampled pixel location. Using a Gaussian relationship for defining the initial weights can be beneficial in terms of reducing the effect of more distant pixels, e.g. the effect of the closest pixel ($816_4$) to the projected location 814 may be strengthened relative to the other identified pixels ($816_1$, $816_2$ and $816_3$). The initial weight ($w_{i,k}$) for an identified pixel, k, of the reference frame 812 can be determined using the distance (d) according to the Gaussian relationship as $w_{i,k} = \frac{1}{2\pi\sigma_w^2} e^{-\frac{d^2}{2\sigma_w^2}}$. The variance of the Gaussian function, $\sigma_w^2$, may be different in different implementations. As an example, the variance of the Gaussian function, $\sigma_w^2$, may be set to be 0.4. The initial weights can then be used to determine the (final) weights for the identified pixels 816 of the reference frame 812.

In examples described herein the weight for each of the identified pixels 816 of the reference frame 812 may be determined in dependence on: (i) the depth value of the current frame 802 for the upsampled pixel location 804, and (ii) the depth value for the location of the identified pixel 816 of the reference frame 812. By taking the depth values into account when determining the weights, the temporal resampling process can reduce blurring effects which may otherwise be introduced when temporal resampling is applied close to edges of objects being represented in the frames. For example, if the edge of an object in the scene passes through the region represented by the identified pixels 816 in the reference frame 812, and if all of the identified pixels are weighted equally then the effect will be to introduce blurring into the upsampled pixel values around the edge of the object. Since only some of the pixel values of the current frame are determined by temporal resampling, the presence of blurring in these pixel values but not in other pixel values can cause blocky artefacts, such as crenulation, which are very noticeable to a viewer of the images. Furthermore, by taking the depth values into account when determining the weights, the temporal resampling process can exclude occlusions. Rejecting hidden/misprojected samples improves edge definition and handles occlusions. If all pixels are rejected in this way, then a process of history rectification may be used (as described below) to fill in the missing pixel value. Normally the depth of an object in a scene will not vary by a large amount between consecutive frames of the sequence of frames. Therefore, if the depth value of an identified pixel 816 of the reference frame 812 is similar enough to the depth value for the upsampled pixel location 804 of the current frame 802 then that identified pixel 816 can be considered to be representing an adjacent point on the same surface as the upsampled pixel location 804 of the current frame, and can therefore be given a relatively high weight. Conversely, if the depth value of an identified pixel 816 of the reference frame 812 is not similar enough to the depth value for the upsampled pixel location 804 of the current frame 802 then that identified pixel 816 may be considered to be representing a non-adjacent point to that represented by the upsampled pixel location 804 of the current frame, which is indicative of an occlusion boundary being crossed, and can therefore be given a relatively low weight.

In particular, the weight for each of the identified pixels 816 of the reference frame 812 may be determined in dependence on a difference between the depth value of the current frame for the upsampled pixel location 804 and the depth value for the location of the identified pixel 816 of the reference frame. Furthermore, the weight for each of the identified pixels 816 of the reference frame 812 may be determined in dependence on the standard deviation of the depth values, $\sigma_{depth}$, that was determined in step S710. For example, the difference between the depth value of the current frame for the upsampled pixel location 804 and the depth value for the location of the identified pixel 816 of the reference frame can be compared with a depth threshold, $T_d$, where the depth threshold is based on the determined standard deviation of the depth values, $\sigma_{depth}$, of the current frame within the region 808 surrounding the upsampled pixel location 804. The tolerance of the depth test (i.e. the value of $T_d$) may be adaptive. It is useful for the tolerance of the depth test (i.e. the value of $T_d$) to be adaptive for the following reasons: (i) If the current frame includes an oblique view of a surface, then there will be a higher depth error when the depth values of the current frame are compared to the depths of corresponding pixels in the reference frame, which means a greater tolerance may be useful to avoid rejecting valid pixels; (ii) The processing system generally does not have control over the scale of the depth, e.g. some scenes may be rendered with distances in metres, and others in millimetres, so the value of $T_d$ may be adapted to correct for the scale in some way to have a robust depth test, and (iii) depth tests for nearby and distant objects should behave similarly. It is noted that non-adaptive methods (i.e. methods in which the value of $T_d$ is not adaptive) would only consider a single pixel we are comparing to. A typical non-adaptive approach would be to determine a threshold (i.e. $T_d$) for a current location based on the depth value at this location, e.g. +/- 10%. Such a non-adaptive method would assign bigger acceptable depth ranges to the locations further away (with bigger depth values) and smaller acceptable depth ranges to the locations closer to the camera (with small depth values). In contrast, in examples described herein, every location is treated similarly by using an adaptive method which accounts for the depths of the pixels around the location we are comparing to, e.g. based on the standard deviation of the depth values of the surrounding pixels.

If the depth of an identified pixel 816 from the reference frame 812 differs from a depth of the upsampled pixel location 804 in the current frame by more than the threshold amount, $T_d$, then the final weight for that identified pixel of the reference frame may be set to be low, e.g. zero. In other words, the weight for an identified pixel 816 of the reference image may be determined to be zero in response to determining that the difference between the depth value of the current frame for the upsampled pixel location 804 and the depth value for the location of the identified pixel 816 of the reference frame is greater than the depth threshold, $T_d$. The depth threshold, $T_d$, may be a hard (binary) threshold or it may be a soft threshold. Where the depth threshold, $T_d$, is a soft threshold then the weight for an identified pixel 816 of the reference image depends on the difference between the depth value of the current frame for the upsampled pixel location 804 and the depth value for the location of the identified pixel 816 of the reference frame, such that as that difference increases the weight for the identified pixel 816 decreases.

To put this more mathematically in the example in which a hard depth threshold is used, the weight, $w_k$, for an identified pixel, k, of the reference image 812 may be determined such that $w_k = w_{i,k} \cdot (|D_{ref,k} - D_{curr}| \leq T_d)$, where $T_d$ is the depth threshold, where $T_d = F_{depth} \cdot \sigma_{depth}$, and where $w_{i,k}$ is the initial weight for the identified pixel of the reference image (e.g. determined according to a distance to the projected location 814 and using a predetermined relationship as described above), $D_{ref,k}$ is the depth value for the location of the identified pixel 816 of the reference frame, $D_{curr}$ is the depth value of the current frame for the upsampled pixel location 804, $F_{depth}$ is a predetermined factor, and $\sigma_{depth}$ is the determined standard deviation of the depth values of the current frame within the region 808 surrounding the upsampled pixel location 804. The predetermined factor, $F_{depth}$, may be set by a developer to have a different value in different implementations, but to give an example, $F_{depth}$ may be 2. In some examples, the predetermined factor, $F_{depth}$, may be a trainable parameter, which may be pre-trained for a specific application. In the equation given above, $(|D_{rer,k} - D_{curr}| \leq T_d)$ = 1 if $|D_{ref,k} - D_{curr}| \leq T_d$ and $(|D_{ref,k} - D_{curr}| \leq T_d)$ = 0 if $|D_{ref,k} - D_{curr}| > T_d$. Therefore, if the difference between the depth value of the current frame for the upsampled pixel location 804 and the depth value for the location of the identified pixel 816 of the reference frame is not greater than the depth threshold, $T_d$, then $w_k = w_{i,k}$; and if the difference between the depth value of the current frame for the upsampled pixel location 804 and the depth value for the location of the identified pixel 816 of the reference frame is greater than the depth threshold, $T_d$, then $w_k = 0$. In this way, identified pixels 816 from the previous frame 812 that have significantly different depths to the upsampled pixel location 804 in the current frame 802 are rejected, which avoids (or at least reduces) artefacts that may be caused by blurring over object edges. The use of the standard deviation, $\sigma_{depth}$, makes the threshold, $T_d$, adaptive. The predetermined factor, $F_{depth}$, defines a confidence interval for the region, e.g. having $F_{depth} = 2$ corresponds to 95% coverage of the depths of the region 808.

As an example, of a soft threshold, a Gaussian weighting $w_k = w_{i,k} \cdot e^{-\left(\frac{(D_{ref,k} - D_{curr})}{T_d}\right)^2}$ may be used. An advantage of using a soft threshold rather than a hard threshold is that it would help avoid sudden transitions between including and rejecting pixels, which may manifest as temporal artefacts. Furthermore, using a soft threshold may also make the algorithm continuously differentiable, which is useful in terms of being able to train the $F_{depth}$ factor.

It is noted that in the exceptional situation in which the weights for all of the identified pixels 816 of the reference frame 812 are determined to be zero, the upsampled pixel value for the upsampled pixel location 804 may be determined to be equal to the mean of the input pixel values, $\mu_{pixel}$, of the current frame 802 within the region 808 surrounding the upsampled pixel location 804. This can happen frequently in disoccluded regions in the current frame. As an alternative to using the mean of the (current frame) input pixels, a process of history rectification (as described below) can be relied upon in this situation.

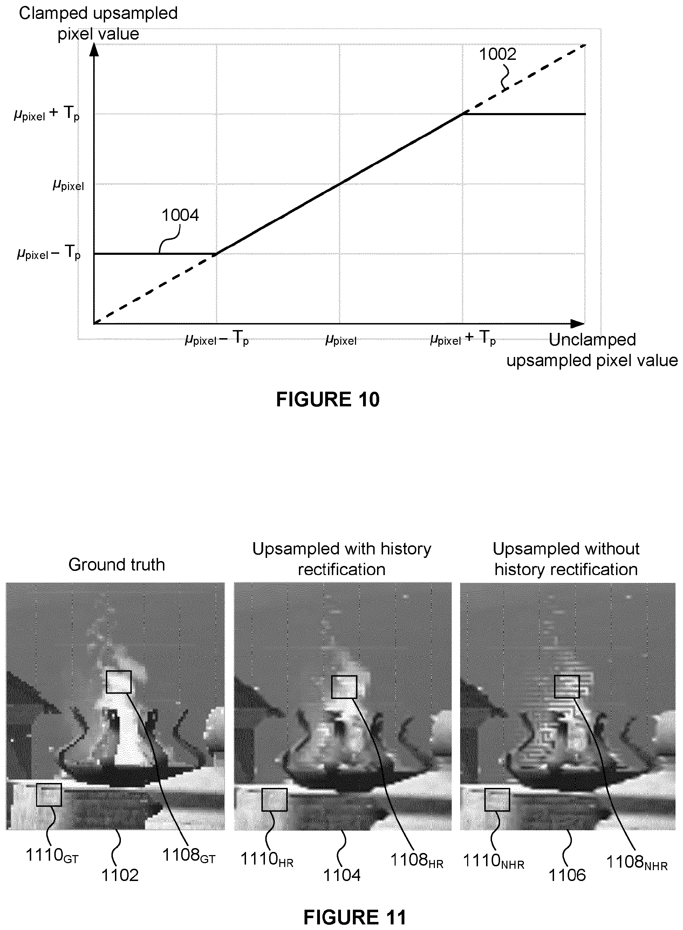

As described above, in step S714, when the weights for the identified pixels have been determined the upsampled pixel value for the upsampled pixel location can then be determined using the weights, e.g. by performing a weighted sum. The weights (w) are normalised to sum to 1 as $w' = \frac{w}{\Sigma w}$ before multiplying the normalised weights ($w'$) with their respective reference input pixels, and summing to yield the temporally resampled result prior to the optional history rectification, which will now be described. A process, referred to herein as "history rectification", may be implemented to prevent significant errors by ensuring that the determined upsampled pixel value does not differ from the determined mean of the input pixel values, $\mu_{pixel}$, of the current frame 802 (determined in step S710) within the region 808 surrounding the upsampled pixel location 804 by more than a threshold value, $T_p$. For example, step S714 may comprise clamping the determined upsampled pixel value so that it does not differ from the determined mean of the input pixel values, $\mu_{pixel}$, of the current frame within the region 808 surrounding the upsampled pixel location 804 by more than the threshold value, $T_p$. The threshold value, $T_p$, may be based on the standard deviation of the input pixel values, $\sigma_{pixel}$, of the current frame within the region 808, as determined in step S710. In particular, the threshold value, $T_p$, may be determined as $T_p = F_{pixel} \cdot \sigma_{pixel}$, where $F_{pixel}$ is a threshold factor, which may be fixed or variable. The threshold factor, $F_{pixel}$, is a pre-determined factor which may be pre-trained. The threshold factor, $F_{pixel}$, may have a different value in different implementations, and may be set by a developer. To give an example, $F_{pixel}$ may be 2. Figure 10 shows a graph illustrating clamping of the determined upsampled pixel value for the upsampled pixel location 804. The dashed line 1002 represents applying no history rectification, i.e. no clamping, such that the upsampled pixel value is unaltered. The solid line 1004 represents the result of applying history rectification, e.g. applying clamping, to the upsampled pixel value. If the (unclamped) upsampled pixel value is within a range from ($\mu_{pixel} - T_p$) to ($\mu_{pixel} + T_p$) then the history rectification, i.e. the clamping, does not alter the upsampled pixel value. However, if the (unclamped) upsampled pixel value is less than ($\mu_{pixel} - T_p$) then the clamped upsampled pixel value 1004 is set to be equal to ($\mu_{pixel} - T_p$); and if the (unclamped) upsampled pixel value is greater than ($\mu_{pixel} + T_p$) then the clamped upsampled pixel value 1004 is set to be equal to ($\mu_{pixel} + T_p$).

The history rectification process described in the preceding paragraph ensures that the resampled pixel value does not differ by too much from the neighbouring pixel values of the current low resolution image 802. History rectification is useful when the appearance at the projected location 814 in the reference frame 812 indicated by the motion vector 813 is not a good match for the appearance of the corresponding location 804 in the current frame 802. For example, history rectification is useful when a motion vector is not representative of actual motion between frames, e.g. for transparent objects, transparent overlays or for objects such as fire or mirrors. The history rectification method might be applied only on a single channel (the Y channel), and the colour can be filled in from the known-correct U and V values from the current frame, e.g. using simple spatial upsampling, such as bilinear upsampling. This is simple and effective compared to other techniques which operate in 3D colour space.

Figure 11 shows three versions of a portion of an upsampled frame: (i) a ground truth version 1102, (ii) a version 1104 in which history rectification has been applied to the upsampled pixel values, and (iii) a version 1106 in which history rectification has not been applied to the upsampled pixel values. This portion of the upsampled frame includes a rendering of fire. A region $1108_{NHR}$ of the version 1106 for which no history rectification is applied includes an image of the fire, and it can be seen that when no history rectification is applied then prominent blocky artefacts are introduced (compared to the corresponding region $1108_{GT}$ of the ground truth version 1102). These blocky artefacts are due to the motion vectors being a poor representation of motion of the fire, since the visual effect is not achieved by means of moving geometry. In contrast, the clamping that is applied by implementing history rectification greatly reduces the prominence of these blocky artefacts, as can be seen in the corresponding region $1108_{HR}$ of the version 1104 for which history rectification is applied.

However, history rectification may not always be beneficial. For example, history rectification can sometimes erroneously remove small image features (e.g. lines with a thickness approximately corresponding to the size of one upsampled pixel). For example, a region $1110_{GT}$ of the ground truth version 1102 includes a thin dark horizontal line near the top of the region, and it can be seen that this dark line is not present in the corresponding region $1110_{HR}$ of the version 1104 for which history rectification is applied. In contrast, the corresponding region $1110_{NHR}$ in the version 1106 for which no history rectification is applied includes this thin dark line.

As such, in some examples, history rectification may be selectively applied to some regions of the image and not to other regions. Usually, motion vectors will be incorrect or unreliable for an entire region of an image rather than isolated pixels, allowing a method based on local neighbourhood statistics to be used to selectively enable or disable the method, or alternatively to modulate the threshold value $T_p$. For example, upsampled pixel values may be determined within the region 808 surrounding the upsampled pixel location 804, without performing history rectification. The processing module 304 (in particular the upsampled pixel value determination logic 506) can compare an average of the upsampled pixel values determined within the region 808 with the mean of the input pixel values, $\mu_{pixel}$, of the current frame 802 within the region 808. If the difference between the average of the upsampled pixel values determined within the region 808 and the mean of the input pixel values, $\mu_{pixel}$, within that region 808 is greater than a threshold difference then the history rectification (i.e. the clamping) is performed; whereas if the difference between the average of the upsampled pixel values determined within the region 808 and the mean of the input pixel values, $\mu_{pixel}$, within that region 808 is not greater than the threshold difference then history rectification (i.e. clamping) is not performed. For example, the difference between the average of the upsampled pixel values within the region $1108_{NHR}$ of the version 1106 and the mean of the input pixel values, $\mu_{pixel}$, for that region (which will look similar to the region $1108_{GT}$ of the ground truth version 1102) will be large, e.g. greater than the threshold difference (if a suitable threshold difference is used), such that history rectification will be applied to this region such that this region of the upsampled image will look like the region $1108_{HR}$ of the version 1104. As another example, the difference between the average of the upsampled pixel values within the region $1110_{NHR}$ of the version 1106 and the mean of the input pixel values, $\mu_{pixel}$, for that region (which will look similar to the region $1110_{GT}$ of the ground truth version 1102) will be small, e.g. less than the threshold difference (if a suitable threshold difference is used), such that history rectification will not be applied to this region such that this region of the upsampled image will look like the region $1110_{NHR}$ of the version 1106.

When the upsampled pixel value has been determined for the upsampled pixel location 804 then in step S716 the processing module 304 determines whether there is another upsampled pixel location for which an upsampled pixel value is to be determined. If there is another upsampled pixel location for which an upsampled pixel value is to be determined then the method passes from step S716 back to step S706, and steps S706 to S716 are performed to determine an upsampled pixel value for the next upsampled pixel location. Each of the determined upsampled pixel values represents a value of an upsampled pixel at a respective upsampled pixel location which does not correspond with the location of any of the input pixels of the current frame. Although Figure 7 illustrates a loop, whereby each upsampled pixel location is processed in turn, this is merely for the clarity of this description, and it is to be understood that in some examples multiple upsampled pixel locations can be processed (e.g. in steps S706 to S716) simultaneously, i.e. in parallel. For example, a GPU would normally process multiple items (e.g. pixels) in parallel.

It is noted that the example described above with reference to the flow chart of Figure 7 is just one example of how the initial block of upsampled pixel values could be determined for the current frame, and in other examples different techniques could be used. For example, the upsampled pixel values for the current frame at the upsampled pixel locations other than the locations of the input pixel values may be determined by applying spatial upsampling (e.g. by performing bilinear interpolation) to input pixel values of the current frame. As one example, a pure spatial upsampling technique could be used whereby the spatial upsampling is the only technique used to determine the initial block of upsampled pixel values for the current frame, i.e. the upsampled pixel values are determined just based on the input pixel values of the current frames, without using any pixel values of other frames. As another example, a combination of spatial upsampling and temporal resampling could be used to determine the initial block of upsampled pixel values for the current frame.

Returning to Figure 4, when the initial block of upsampled pixel values for the current frame has been determined in step S404, the initial block of upsampled pixel values is passed from the processing module 304 (e.g. implemented on a GPU) to the refinement module 306 (e.g. implemented on the GPU or on an NNA) and the method moves to step S406.

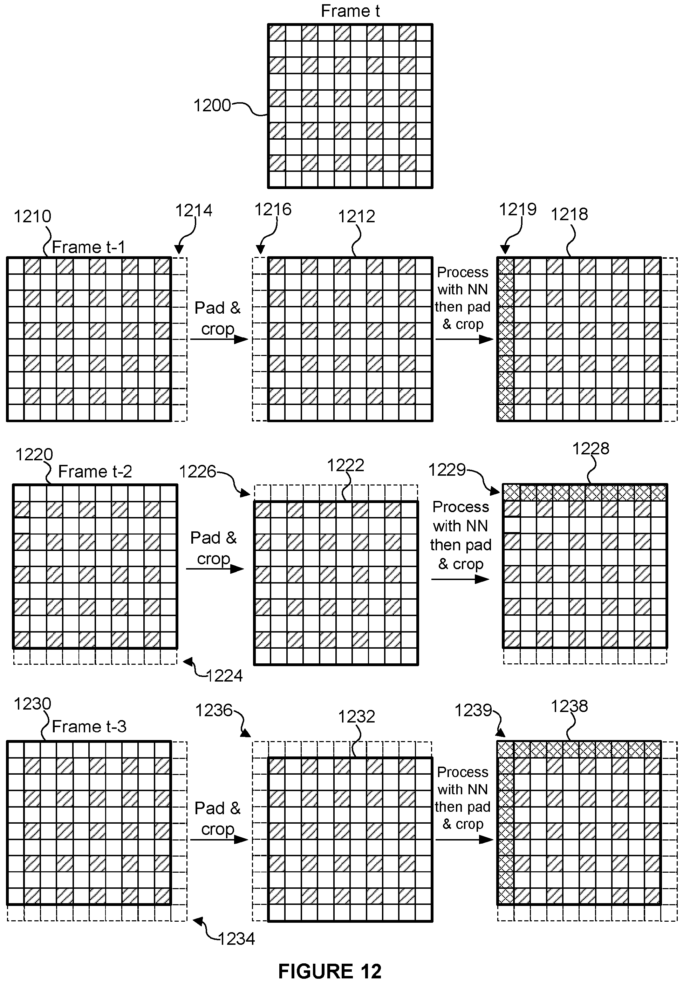

In step S406 the refinement module 306 (in particular the alignment logic 508) determines an aligned block of upsampled pixel values for the current frame based on the initial block of upsampled pixel values for the current frame in accordance with the jitter pattern. As described above, the jitter pattern is used over the sequence of frames so that different frames of the sequence have input pixel values at locations corresponding to different upsampled pixel locations. Figure 12 shows initial blocks of upsampled pixel values for four consecutive frames of a sequence. In particular, Figure 12 shows an initial block of upsampled pixel values 1200 for frame t, an initial block of upsampled pixel values 1210 for frame t-1, an initial block of upsampled pixel values 1220 for frame t-2, and an initial block of upsampled pixel values 1230 for frame t-3. The upsampled pixel locations shown with diagonal hatching in Figure 12 represent the positions of the input pixel values within the initial blocks of upsampled pixel values. It can be seen that, due to the jitter pattern, the initial block of upsampled pixel values 1200 for frame t has input pixel values in locations that are in odd rows and odd columns, the initial block of upsampled pixel values 1210 for frame t-1 has input pixel values in locations that are in odd rows and even columns, the initial block of upsampled pixel values 1220 for frame t-2 has input pixel values in locations that are in even rows and odd columns, and the initial block of upsampled pixel values 1230 for frame t-3 has input pixel values in locations that are in even rows and even columns. Step S406 aligns the blocks of upsampled pixel values with each other. In particular, for one or more of the frames of the sequence (but not necessarily for all of the frames) the aligned block of upsampled pixel values is determined by processing, i.e. manipulating, the initial block of upsampled pixel values so that the input pixel values are located in the same positions within the aligned blocks of upsampled pixel values for all of the frames. For example, in step S406, for one or more of the frames of the sequence (but not necessarily for all of the frames), the alignment logic 508 may perform one or both of padding and cropping to the initial block of upsampled pixel values for that frame to determine the aligned block of upsampled pixel values for that frame, such that the input pixel values are located in the same positions within the aligned blocks of upsampled pixel values for all of the frames. The alignment logic 508 can applying padding to an initial block of upsampled pixel values by adding a row and/or a column of upsampled pixel locations to the initial block of upsampled pixel values. The row and/or column of upsampled pixel locations may be added at an edge (i.e. an external edge, e.g. at the top, bottom, left or right) of the initial block of upsampled pixel values. The alignment logic 508 can applying cropping to an initial block of upsampled pixel values by removing a row and/or a column of upsampled pixel locations from the initial block of upsampled pixel values. The row and/or column of upsampled pixel locations may be removed from an edge (i.e. an external edge, e.g. at the top, bottom, left or right) of the initial block of upsampled pixel values. The upsampled pixel values of the initial blocks which are not padded or cropped in step S406 are left unchanged by step S406, i.e. those upsampled pixel values which are not padded or cropped are the same in the initial blocks and the corresponding aligned blocks.

As described below, in some examples, the cropping and padding steps do not have to be explicitly performed. For example, the effect of padding can be implemented implicitly (i.e. the same result can be achieved) via offset sampling, e.g. in which zeros are returned to represent pixels for which padding is applied (i.e. if the pixel is outside the bounds of the image). Furthermore, the effect of cropping can be implemented implicitly (i.e. it can be inferred) via offset writing, e.g. in which cropped output pixels are not written. Offset sampling and offset writing are inverse operations to each other.

Figure 12 shows an example in which step S406 involves applying both padding and cropping to the initial blocks of upsampled pixel values for some of the frames. In this example, no padding or cropping is applied to the initial block of upsampled pixel values 1200 for frame t. In other words, for frame t, the aligned block of upsampled pixel values is equal to the initial block of upsampled pixel values 1200.

However, padding and cropping is applied to the initial block of upsampled pixel values 1210 for frame t-1 to determine the aligned block of upsampled pixel values 1212 for frame t-1. In particular, padding is performed to add a column of upsampled pixel locations to the right of the initial block of upsampled pixel values 1210 (as shown by the column of dashed upsampled pixel locations 1214), and cropping is performed to remove a column of upsampled pixel locations from the left of the initial block of upsampled pixel values 1210 (as shown by the column of dashed upsampled pixel locations 1216). The aligned block of upsampled pixel values 1212 for frame t-1 is aligned with the aligned block of upsampled pixel values 1200 for frame t. In particular, the aligned block of upsampled pixel values 1212 for frame t-1 has input pixel values in the same positions as the input pixel values in the aligned block of upsampled pixel values 1200 for frame t. Furthermore, the aligned block of upsampled pixel values 1212 for frame t-1 is the same size and shape as the aligned block of upsampled pixel values 1200 for frame t.

Similarly, padding and cropping is applied to the initial block of upsampled pixel values 1220 for frame t-2 to determine the aligned block of upsampled pixel values 1222 for frame t-2. In particular, padding is performed to add a row of upsampled pixel locations to the bottom of the initial block of upsampled pixel values 1220 (as shown by the row of dashed upsampled pixel locations 1224), and cropping is performed to remove a row of upsampled pixel locations from the top of the initial block of upsampled pixel values 1220 (as shown by the row of dashed upsampled pixel locations 1226). The aligned block of upsampled pixel values 1222 for frame t-2 is aligned with the aligned block of upsampled pixel values 1200 for frame t. In particular, the aligned block of upsampled pixel values 1222 for frame t-2 has input pixel values in the same positions as the input pixel values in the aligned block of upsampled pixel values 1200 for frame t. Furthermore, the aligned block of upsampled pixel values 1222 for frame t-2 is the same size and shape as the aligned block of upsampled pixel values 1200 for frame t.

Similarly, padding and cropping is applied to the initial block of upsampled pixel values 1230 for frame t-3 to determine the aligned block of upsampled pixel values 1232 for frame t-3. In particular, padding is performed to add a row and a column of upsampled pixel locations to the bottom and to the right of the initial block of upsampled pixel values 1230 (as shown by the row and column of dashed upsampled pixel locations 1234), and cropping is performed to remove a row and a column of upsampled pixel locations from the top and from the left of the initial block of upsampled pixel values 1230 (as shown by the row and column of dashed upsampled pixel locations 1236). The aligned block of upsampled pixel values 1232 for frame t-3 is aligned with the aligned block of upsampled pixel values 1200 for frame t. In particular, the aligned block of upsampled pixel values 1232 for frame t-3 has input pixel values in the same positions as the input pixel values in the aligned block of upsampled pixel values 1200 for frame t. Furthermore, the aligned block of upsampled pixel values 1232 for frame t-3 is the same size and shape as the aligned block of upsampled pixel values 1200 for frame t.

The values that are added (at the added row and/or column of upsampled pixel locations) may be any suitable value. In a first example, which is simple to implement, the values that are added are all zeros. In a second example, which is slightly more complex to implement than the first example but which tends to provide slightly better results, the values that are added at an added row and/or column of upsampled pixel locations are copies of upsampled pixel values at an adjacent row and/or column of upsampled pixel locations in the initial block of upsampled pixel values. To give some examples, the values of the column 1214 of upsampled pixel values in the aligned block of upsampled pixel values 1212 may be copies of the upsampled pixel values from the rightmost column of upsampled pixel values in the initial block of upsampled pixel values 1210 for frame t-1; the values of the row 1224 of upsampled pixel values in the aligned block of upsampled pixel values 1222 may be copies of the upsampled pixel values from the bottom row of upsampled pixel values in the initial block of upsampled pixel values 1220 for frame t-2; and the values of the row and column 1234 of upsampled pixel values in the aligned block of upsampled pixel values 1232 may be copies of the upsampled pixel values from the bottom row and the rightmost column of upsampled pixel values in the initial block of upsampled pixel values 1230 for frame t-3 (where the added value in the bottom right corner of the aligned block of upsampled pixel values 1232 may for example be a copy of the bottom right upsampled pixel value in the initial block of upsampled pixel values 1230).

The aligned blocks of upsampled pixel values 1200, 1212, 1222 and 1232 for frames t, t-1, t-2 and t-3 are aligned with each other, i.e. they have input pixel values in the same positions. Furthermore, the aligned blocks of upsampled pixel values 1200, 1212, 1222 and 1232 for frames t, t-1, t-2 and t-3 are the same size and shape as each other. This makes it significantly easier to perform refinement (e.g. using a set of one or more neural networks 512) since the locations of the most up to date (and therefore most reliable) pixel values (corresponding to the current input frame) are fixed from the point of view of the rest of the refinement logic. In turn, this reduces the complexity of the refinement logic, leading for example to a saving in the size and number of parameters of neural networks, which corresponds to faster execution, lower bandwidth consumption, lower silicon area, and/or lower power consumption for the deployed system.

For each of the plurality of the frames of the sequence of frames, each $n \times m$ sub-block of upsampled pixel values in the initial block of upsampled pixel values comprises one input pixel value and (nm - 1) other upsampled pixel values, and each $n \times m$ sub-block of upsampled pixel values in the aligned block of upsampled pixel values comprises one input pixel value and (nm - 1) other upsampled pixel values. In the example shown in Figure 12, $n = m = 2$, but in other examples, n and/or m may take a different value, e.g. the sub-blocks could be 3x2, 4x1 or 3x3 sub-blocks. In accordance with the jitter pattern, the positions of the input pixel values within the $n \times m$ sub-blocks of upsampled pixel values in the initial blocks of upsampled pixel values (1200, 1210, 1220, 1230) are different for different frames of the plurality of frames. In contrast, the padding and/or cropping that is applied in step S406 is such that the positions of the input pixel values within the $n \times m$ sub-blocks of upsampled pixel values in the aligned blocks of upsampled pixel values (1200, 1212, 1222, 1232) are the same for all of the frames of the plurality of frames.

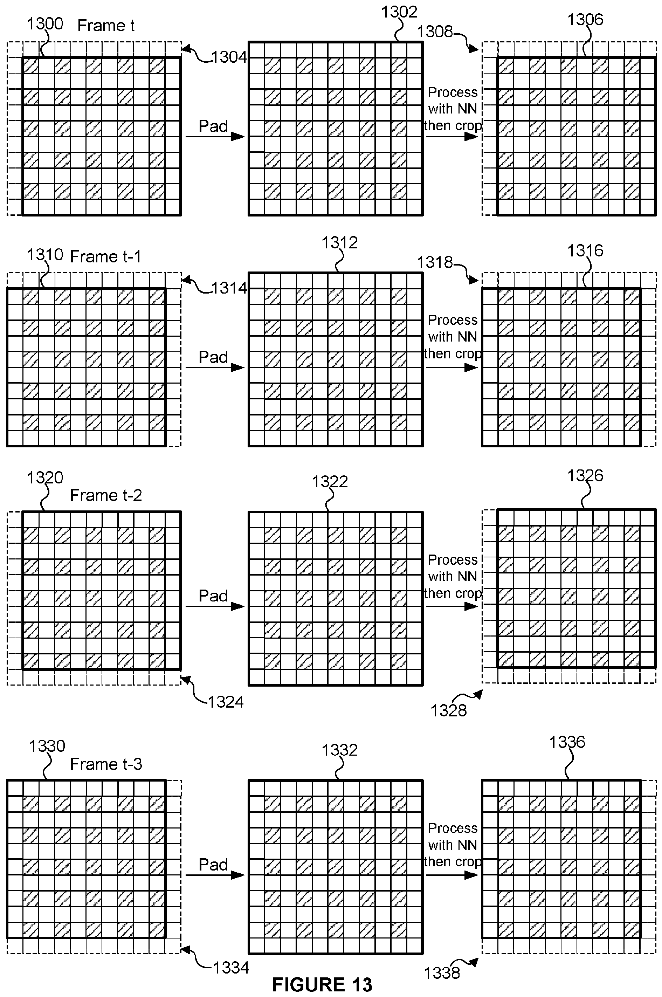

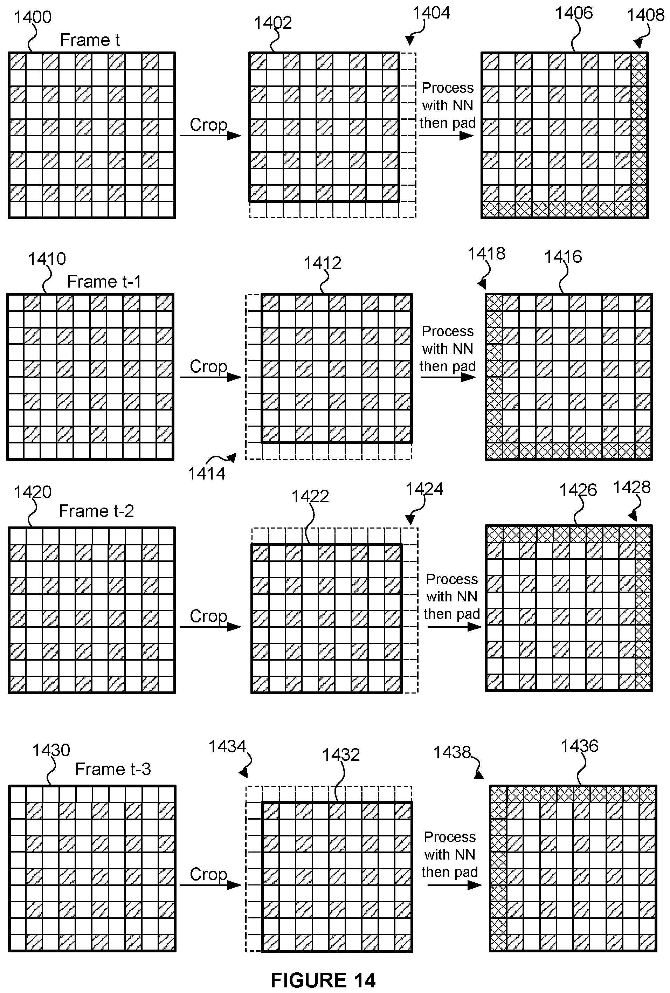

Figures 13 and 14 show examples in which, for one or more (e.g. all) of the frames of the sequence, step S406 comprises applying only one of padding and cropping to the initial block of upsampled pixel values for that frame to determine the aligned block of upsampled pixel values for that frame. In particular, Figure 13 shows an example in which only padding (not cropping) is applied to initial blocks of upsampled pixel values for four frames to determine the aligned blocks of upsampled pixel values. In particular, in the example shown in Figure 13 padding is applied to the initial blocks of upsampled pixel values for the different frames by adding a row and a column to different edges of the initial blocks for the different frames, such that the aligned blocks of upsampled pixel values are aligned with each other.

In particular, padding is applied to an initial block of upsampled pixel values 1300 for frame t to add a row and a column of upsampled pixel locations to the top and to the left of the initial block of upsampled pixel values 1300 (as shown by the row and column of dashed upsampled pixel locations 1304) to thereby determine an aligned block of upsampled pixel values 1302 for frame t.

Similarly, padding is applied to an initial block of upsampled pixel values 1310 for frame t-1 to add a row and a column of upsampled pixel locations to the top and to the right of the initial block of upsampled pixel values 1310 (as shown by the row and column of dashed upsampled pixel locations 1314) to thereby determine an aligned block of upsampled pixel values 1312 for frame t-1. The aligned block of upsampled pixel values 1312 for frame t-1 is aligned with the aligned block of upsampled pixel values 1302 for frame t. In particular, the aligned block of upsampled pixel values 1312 for frame t-1 has input pixel values in the same positions as the input pixel values in the aligned block of upsampled pixel values 1302 for frame t. Furthermore, the aligned block of upsampled pixel values 1312 for frame t-1 is the same size and shape as the aligned block of upsampled pixel values 1302 for frame t.

Similarly, padding is applied to an initial block of upsampled pixel values 1320 for frame t-2 to add a row and a column of upsampled pixel locations to the bottom and to the left of the initial block of upsampled pixel values 1320 (as shown by the row and column of dashed upsampled pixel locations 1324) to thereby determine an aligned block of upsampled pixel values 1322 for frame t-2. The aligned block of upsampled pixel values 1322 for frame t-2 is aligned with the aligned blocks of upsampled pixel values 1302 and 1312 for frames t and t-1. In particular, the aligned block of upsampled pixel values 1322 for frame t-2 has input pixel values in the same positions as the input pixel values in the aligned blocks of upsampled pixel values 1302 and 1312 for frames t and t-1. Furthermore, the aligned block of upsampled pixel values 1322 for frame t-2 is the same size and shape as the aligned blocks of upsampled pixel values 1302 and 1312 for frames t and t-1.

Similarly, padding is applied to an initial block of upsampled pixel values 1330 for frame t-3 to add a row and a column of upsampled pixel locations to the bottom and to the right of the initial block of upsampled pixel values 1330 (as shown by the row and column of dashed upsampled pixel locations 1334) to thereby determine an aligned block of upsampled pixel values 1332 for frame t-3. The aligned block of upsampled pixel values 1332 for frame t-3 is aligned with the aligned blocks of upsampled pixel values 1302, 1312 and 1322 for frames t, t-1 and t-2. In particular, the aligned block of upsampled pixel values 1332 for frame t-3 has input pixel values in the same positions as the input pixel values in the aligned blocks of upsampled pixel values 1302, 1312 and 1322 for frames t, t-1 and t-2. Furthermore, the aligned block of upsampled pixel values 1332 for frame t-3 is the same size and shape as the aligned blocks of upsampled pixel values 1302, 1312 and 1322 for frames t, t-1 and t-2.

As described above, the values that are added (at the added row and column of upsampled pixel locations) may be any suitable value, e.g. zeros or copies of upsampled pixel values at adjacent rows and columns of upsampled pixel locations in the initial block of upsampled pixel values.

Figure 14 shows an example in which only cropping (not padding) is applied to initial blocks of upsampled pixel values for four frames to determine the aligned blocks of upsampled pixel values. In particular, in the example shown in Figure 14 cropping is applied to the initial blocks of upsampled pixel values for the different frames by removing a row and a column from different edges of the initial blocks for the different frames, such that the aligned blocks of upsampled pixel values are aligned with each other.

In particular, cropping is applied to an initial block of upsampled pixel values 1400 for frame t to remove a row and a column of upsampled pixel locations from the bottom and from the right of the initial block of upsampled pixel values 1400 (as shown by the row and column of dashed upsampled pixel locations 1404) to thereby determine an aligned block of upsampled pixel values 1402 for frame t.

Similarly, cropping is applied to an initial block of upsampled pixel values 1410 for frame t-1 to remove a row and a column of upsampled pixel locations from the bottom and from the left of the initial block of upsampled pixel values 1410 (as shown by the row and column of dashed upsampled pixel locations 1414) to thereby determine an aligned block of upsampled pixel values 1412 for frame t-1. The aligned block of upsampled pixel values 1412 for frame t-1 is aligned with the aligned block of upsampled pixel values 1402 for frame t. In particular, the aligned block of upsampled pixel values 1412 for frame t-1 has input pixel values in the same positions as the input pixel values in the aligned block of upsampled pixel values 1402 for frame t. Furthermore, the aligned block of upsampled pixel values 1412 for frame t-1 is the same size and shape as the aligned block of upsampled pixel values 1402 for frame t.

Similarly, cropping is applied to an initial block of upsampled pixel values 1420 for frame t-2 to remove a row and a column of upsampled pixel locations from the top and from the right of the initial block of upsampled pixel values 1420 (as shown by the row and column of dashed upsampled pixel locations 1424) to thereby determine an aligned block of upsampled pixel values 1422 for frame t-2. The aligned block of upsampled pixel values 1422 for frame t-2 is aligned with the aligned blocks of upsampled pixel values 1402 and 1412 for frames t and t-1. In particular, the aligned block of upsampled pixel values 1422 for frame t-2 has input pixel values in the same positions as the input pixel values in the aligned blocks of upsampled pixel values 1402 and 1412 for frames t and t-1. Furthermore, the aligned block of upsampled pixel values 1422 for frame t-2 is the same size and shape as the aligned blocks of upsampled pixel values 1402 and 1412 for frames t and t-1.

Similarly, cropping is applied to an initial block of upsampled pixel values 1430 for frame t-3 to remove a row and a column of upsampled pixel locations from the top and from the left of the initial block of upsampled pixel values 1430 (as shown by the row and column of dashed upsampled pixel locations 1434) to thereby determine an aligned block of upsampled pixel values 1432 for frame t-3. The aligned block of upsampled pixel values 1432 for frame t-3 is aligned with the aligned blocks of upsampled pixel values 1402, 1412 and 1422 for frames t, t-1 and t-2. In particular, the aligned block of upsampled pixel values 1432 for frame t-3 has input pixel values in the same positions as the input pixel values in the aligned blocks of upsampled pixel values 1402, 1412 and 1422 for frames t, t-1 and t-2. Furthermore, the aligned block of upsampled pixel values 1432 for frame t-3 is the same size and shape as the aligned blocks of upsampled pixel values 1402, 1412 and 1422 for frames t, t-1 and t-2.

In step S408 the refinement module 306 determines a block of refinement values to be applied to the initial block of upsampled pixel values for the current frame. As described below, step S408 comprises processing the aligned block of upsampled pixel values for the current frame using the set of one or more neural networks 512. The "refinement" values may be considered to be "adjustment" values, "correction" values or "delta" values, and may broadly be understood as correcting for error resulting from processes such as the aforementioned temporal resampling, and changes in appearance over time (such as movement of shadows, etc).

In an example, step S408 comprises processing the aligned block of upsampled pixel values that was determined in step S406 using the space-to-depth logic 510, the set of one or more neural networks 512, the depth-to space logic 514 and the realignment logic 516. In this example, the aligned block of upsampled pixel values that is determined by the alignment logic 508 in step S406 is received at the space-to-depth logic 510. The space-to-depth logic 510 performs a space-to-depth process to divide (i.e. split) the upsampled pixel values of the aligned block into a plurality of channels. The input pixel values of the aligned block are grouped into a single one of the plurality of channels, and the upsampled pixel values of the aligned block which are not input pixel values are grouped into one or more other channels of the plurality of channels. For example, the input pixel values of each of the aligned blocks may always appear in the same channel after the alignment and the space-to-depth process have been performed. The number of channels may be approximately equal to the number of upsampled pixel values in the initial block of upsampled pixel values divided by the number of those upsampled pixel values that are input pixel values. In particular, there may be $n \times m$ channels, and the spatial extent of the tensor would be (approximately) $1/n$ and $1/m$ of the original spatial dimensions. One of these channels would be the input pixels from the current frame. In the examples described in detail herein there are four channels.

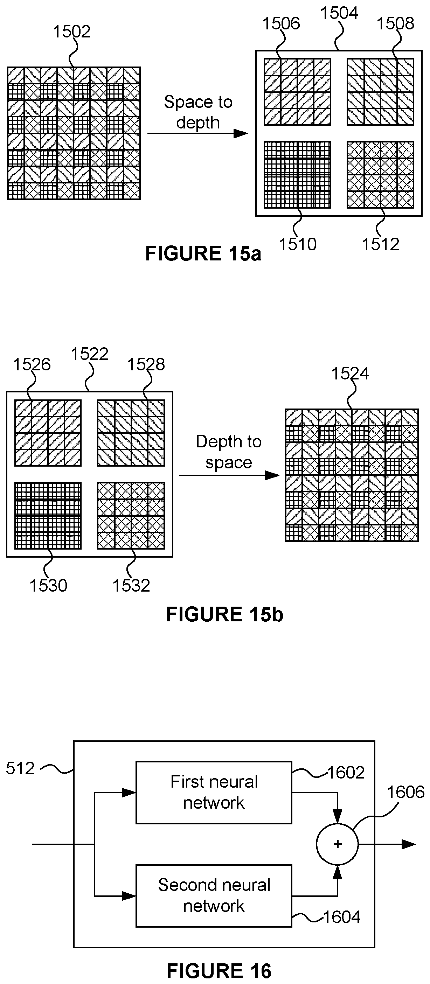

Figure 15a shows an example in which a space-to-depth process is performed on an aligned block of upsampled pixel values 1502 to determine a tensor 1504 comprising per-channel blocks of upsampled pixel values 1506, 1508, 1510 and 1512 for four respective channels. In this example, the per-channel blocks of upsampled pixel values 1506, 1508, 1510 and 1512 are the same size and shape as each other. In this example, an 8x8 block (e.g. of Y values) 1502 is transformed into a 4x4x4 block 1504, where (for example) the final dimension denotes the number of channels. In examples having multi-channel inputs (e.g. representing RGB or YUV values), the input block may be an 8x8x3 block of values, and the space-to-depth process may determine a 4x4x12 block of values, where the colour channels are interleaved on the final dimension.

Each of the upsampled pixel values in the aligned block of upsampled pixel values 1502 is shown with a particular type of hatching: diagonally upwards hatching, diagonally downwards hatching, square cross-hatching or diagonal cross-hatching, where those upsampled pixel values with the same type of hatching are placed into the same channel by the space-to-depth process. For each 2x2 sub-block of upsampled pixel values in the aligned block of upsampled pixel values 1502, the four upsampled pixel values in that 2x2 sub-block are placed into different per-channel blocks 1506, 1508, 1510 and 1512. For example, the upsampled pixel values of the aligned block 1502 that are shown with diagonally upwards hatching (e.g. the top left upsampled pixel value in the aligned block 1502) may be the input pixel values, and these input pixel values are sorted into the per-channel block 1506 for one of the channels. In contrast, the upsampled pixel values of the aligned block 1502 which are not input pixel values are placed into the other per-channel blocks 1508, 1510 and 1512 for the other channels.

The space-to-depth logic 510 passes the tensor 1504 of upsampled pixel values of the aligned block to the set of one or more neural networks 512. In this example, step S408 involves the set of one or more neural networks 512 processing the upsampled pixel values of the aligned block in the channels to determine a block of neural network output values in the plurality of channels. The neural network output values represent refinement values to be applied to the upsampled pixel values of the initial block.

In this example, step S408 involves passing the neural network output values from the set of one or more neural networks 512 to the depth-to-space logic 514, and performing a depth-to-space process using the depth-to-space logic 514 to interleave the neural network output values from the plurality of channels back into a single channel.

Figure 15b shows a tensor 1522 comprising per-channel blocks of neural network output values 1526, 1528, 1530 and 1532 for four respective channels. In this example, the per-channel blocks of neural network output values 1526, 1528, 1530 and 1532 are the same size and shape as each other. Figure 15b shows an example in which a depth-to-space process is performed to interleave the neural network output values from the four channels into a block of values 1524 in a single channel. As mentioned above, the neural network output values in the block of values 1524 represent refinement values to be applied to the upsampled pixel values of the initial block. Each of the neural network output values in Figure 15b is shown with a particular type of hatching: diagonally upwards hatching, diagonally downwards hatching, square cross-hatching or diagonal cross-hatching, where the neural network output values within a per-channel block (1526, 1528, 1530 and 1532) all have the same type of hatching, and wherein the depth-to-space process interleaves the neural network output values, such that for each 2x2 sub-block of neural network output values in the block of values 1524, the four neural network output values in that 2x2 sub-block have come from different channels. More generally, for each nxm sub-block of neural network output values in the block of values, the $nm$ neural network output values in that $nxm$ sub-block have come from different channels.

The depth-to-space process performed by the depth-to-space logic 514 is complimentary to (i.e. counteracts the effects of) the space-to-depth process performed by the space-to-depth logic 510. Therefore, the block of neural network output values 1524 is the same size and shape as the aligned block of upsampled pixel values 1502. Furthermore, the neural network output value at any given position in the block of values 1524 relates to (i.e. provides a refinement value for) the upsampled pixel value at that given position in the aligned block of upsampled pixel values.

So step S408 comprises processing the aligned block of upsampled pixel values using the set of one or more neural networks using the space-to-depth logic 510, the set of one or more neural networks 512 and the depth-to-space logic 514. For some of the frames, step S408 also comprises using the realignment logic 516 to realign the result 1524 of processing the aligned block of upsampled pixel values using the set of one or more neural networks. The realignment applied by the realignment logic 516 counteracts (i.e. cancels out, reverts, or opposes) the alignment applied by the alignment logic 508. In particular, the result of processing the aligned block of upsampled pixel values for a frame may be manipulated to counteract the manipulation of the initial block of upsampled pixel values that was performed when the aligned block of upsampled pixel values was determined for that frame. For example, one or both of padding and cropping may be applied to the result of processing the aligned block of upsampled pixel values for a frame to counteract the one or both of padding and cropping that was applied when the aligned block of upsampled pixel values was determined for that frame.

In particular, step S408 comprises, for the frames for which the alignment logic 508 applied one or both of padding and cropping in step S406, applying one or both of padding and cropping to the result 1524 of processing the aligned block of upsampled pixel values using the set of one or more neural networks, to counteract the one or both of padding and cropping that was applied when the aligned block of upsampled pixel values was determined. The output from the realignment logic is a block of refinement values to be applied to the initial block of upsampled pixel values for the current frame.

In the example shown in Figure 12, the alignment logic 508 did not apply any padding or cropping to the initial block of upsampled pixel values 1200 for frame t in step S406, so the realignment logic 516 does not apply any padding or cropping in step S408 to determine a block of refinement values for frame t.

As described above in relation to Figure 12, the alignment logic 508 applied padding and cropping to the initial block of upsampled pixel values 1210 for frame t-1 in step S406 to determine the aligned block of upsampled pixel values 1212. As such, in step S408 the realignment logic 516 applies padding and cropping to determine a block of refinement values 1218 for frame t-1. In particular, padding is performed to add a column of refinement values to the left of the block of refinement values output from the depth-to-space logic 514 (as shown by the column of cross-hatched refinement values 1219), and cropping is performed to remove a column of refinement values from the right of the block of refinement values output from the depth-to-space logic 514 (as shown by the column of dashed refinement value locations). The added refinement values 1219 could have any suitable value, e.g. they could be zero. The block of refinement values 1218 for frame t-1 is aligned with the initial block of upsampled pixel values 1210 for frame t-1. In other words, the positions of the refinement values in the block of refinement values 1218 correspond to the positions of the upsampled pixel values to which they are to be applied in the initial block of upsampled pixel values 1210. For example, the block of refinement values 1218 for frame t-1 has refinement values (shown with diagonal hatching) to be applied to input pixel values at the same positions as the locations of those input pixel values in the aligned block of upsampled pixel values 1210.

Similarly, as described above in relation to Figure 12, the alignment logic 508 applied padding and cropping to the initial block of upsampled pixel values 1220 for frame t-2 in step S406 to determine the aligned block of upsampled pixel values 1222. As such, in step S408 the realignment logic 516 applies padding and cropping to determine a block of refinement values 1228 for frame t-2. In particular, padding is performed to add a row of refinement values at the top of the block of refinement values output from the depth-to-space logic 514 (as shown by the row of cross-hatched refinement values 1229), and cropping is performed to remove a row of refinement values from the bottom of the block of refinement values output from the depth-to-space logic 514 (as shown by the row of dashed refinement value locations). The added refinement values 1229 could have any suitable value, e.g. they could be zero. The block of refinement values 1228 for frame t-2 is aligned with the initial block of upsampled pixel values 1220 for frame t-2. In other words, the positions of the refinement values in the block of refinement values 1228 correspond to the positions of the upsampled pixel values to which they are to be applied in the initial block of upsampled pixel values 1220. For example, the block of refinement values 1228 for frame t-2 has refinement values (shown with diagonal hatching) to be applied to input pixel values at the same positions as the locations of those input pixel values in the aligned block of upsampled pixel values 1220.

Similarly, as described above in relation to Figure 12, the alignment logic 508 applied padding and cropping to the initial block of upsampled pixel values 1230 for frame t-3 in step S406 to determine the aligned block of upsampled pixel values 1232. As such, in step S408 the realignment logic 516 applies padding and cropping to determine a block of refinement values 1238 for frame t-3. In particular, padding is performed to add a row and a column of refinement values at the top and at the left of the block of refinement values output from the depth-to-space logic 514 (as shown by the row and the column of cross-hatched refinement values 1239), and cropping is performed to remove a row and a column of refinement values from the bottom of the block of refinement values output from the depth-to-space logic 514 (as shown by the row of dashed refinement value locations). The added refinement values 1239 could have any suitable value, e.g. they could be zero. The block of refinement values 1238 for frame t-3 is aligned with the initial block of upsampled pixel values 1230 for frame t-3. In other words, the positions of the refinement values in the block of refinement values 1238 correspond to the positions of the upsampled pixel values to which they are to be applied in the initial block of upsampled pixel values 1230. For example, the block of refinement values 1238 for frame t-3 has refinement values (shown with diagonal hatching) to be applied to input pixel values at the same positions as the locations of those input pixel values in the aligned block of upsampled pixel values 1230.

In the examples shown in Figures 13 and 14, step S406 involved applying only a first one of padding and cropping to the initial block of upsampled pixel values to determine the aligned block of upsampled pixel values for a frame. In these examples, in step S408 the realignment logic 516 applies a second one of padding and cropping to the result of processing the aligned block of upsampled pixel values for that frame using the set of one or more neural networks. The "first one of padding and cropping" is different to the "second one of padding and cropping".

As described above in relation to Figure 13, the alignment logic 508 applied only padding to the initial block of upsampled pixel values 1300 for frame t in step S406 to determine the aligned block of upsampled pixel values 1302. As such, in step S408 the realignment logic 516 applies only cropping to determine a block of refinement values 1306 for frame t. In particular, cropping is performed to remove a row and a column of refinement values from the top and from the left of the block of refinement values output from the depth-to-space logic 514 (as shown by the row and column of dashed refinement value locations 1308). The block of refinement values 1306 for frame t is aligned with the initial block of upsampled pixel values 1300 for frame t. In other words, the positions of the refinement values in the block of refinement values 1306 correspond to the positions of the upsampled pixel values to which they are to be applied in the initial block of upsampled pixel values 1300. For example, the block of refinement values 1306 for frame t has refinement values (shown with diagonal hatching) to be applied to input pixel values at the same positions as the locations of those input pixel values in the aligned block of upsampled pixel values 1300.

Similarly, as described above in relation to Figure 13, the alignment logic 508 applied only padding to the initial block of upsampled pixel values 1310 for frame t-1 in step S406 to determine the aligned block of upsampled pixel values 1312. As such, in step S408 the realignment logic 516 applies only cropping to determine a block of refinement values 1316 for frame t-1. In particular, cropping is performed to remove a row and a column of refinement values from the top and from the right of the block of refinement values output from the depth-to-space logic 514 (as shown by the row and column of dashed refinement value locations 1318). The block of refinement values 1316 for frame t-1 is aligned with the initial block of upsampled pixel values 1310 for frame t-1. In other words, the positions of the refinement values in the block of refinement values 1316 correspond to the positions of the upsampled pixel values to which they are to be applied in the initial block of upsampled pixel values 1310. For example, the block of refinement values 1316 for frame t-1 has refinement values (shown with diagonal hatching) to be applied to input pixel values at the same positions as the locations of those input pixel values in the aligned block of upsampled pixel values 1310.

Similarly, as described above in relation to Figure 13, the alignment logic 508 applied only padding to the initial block of upsampled pixel values 1320 for frame t-2 in step S406 to determine the aligned block of upsampled pixel values 1322. As such, in step S408 the realignment logic 516 applies only cropping to determine a block of refinement values 1326 for frame t-2. In particular, cropping is performed to remove a row and a column of refinement values from the bottom and from the left of the block of refinement values output from the depth-to-space logic 514 (as shown by the row and column of dashed refinement value locations 1328). The block of refinement values 1326 for frame t-2 is aligned with the initial block of upsampled pixel values 1320 for frame t-2. In other words, the positions of the refinement values in the block of refinement values 1326 correspond to the positions of the upsampled pixel values to which they are to be applied in the initial block of upsampled pixel values 1320. For example, the block of refinement values 1326 for frame t-2 has refinement values (shown with diagonal hatching) to be applied to input pixel values at the same positions as the locations of those input pixel values in the aligned block of upsampled pixel values 1320.

Similarly, as described above in relation to Figure 13, the alignment logic 508 applied only padding to the initial block of upsampled pixel values 1330 for frame t-3 in step S406 to determine the aligned block of upsampled pixel values 1332. As such, in step S408 the realignment logic 516 applies only cropping to determine a block of refinement values 1336 for frame t-3. In particular, cropping is performed to remove a row and a column of refinement values from the bottom and from the right of the block of refinement values output from the depth-to-space logic 514 (as shown by the row and column of dashed refinement value locations 1338). The block of refinement values 1336 for frame t-3 is aligned with the initial block of upsampled pixel values 1330 for frame t-3. In other words, the positions of the refinement values in the block of refinement values 1336 correspond to the positions of the upsampled pixel values to which they are to be applied in the initial block of upsampled pixel values 1330. For example, the block of refinement values 1336 for frame t-3 has refinement values (shown with diagonal hatching) to be applied to input pixel values at the same positions as the locations of those input pixel values in the aligned block of upsampled pixel values 1330.

As described above in relation to the example shown in Figure 14, the alignment logic 508 applied only cropping to the initial block of upsampled pixel values 1400 for frame t in step S406 to determine the aligned block of upsampled pixel values 1402. As such, in step S408 the realignment logic 516 applies only padding to determine a block of refinement values 1406 for frame t. In particular, padding is performed to add a row and a column of refinement values to the bottom and to the right of the block of refinement values output from the depth-to-space logic 514 (as shown by the row and column of refinement value locations 1408 with cross-hatching). The added refinement values 1408 could have any suitable value, e.g. they could be zero. The block of refinement values 1406 for frame t is aligned with the initial block of upsampled pixel values 1400 for frame t. In other words, the positions of the refinement values in the block of refinement values 1406 correspond to the positions of the upsampled pixel values to which they are to be applied in the initial block of upsampled pixel values 1400. For example, the block of refinement values 1406 for frame t has refinement values (shown with diagonal hatching) to be applied to input pixel values at the same positions as the locations of those input pixel values in the aligned block of upsampled pixel values 1400.

Similarly, as described above in relation to Figure 14, the alignment logic 508 applied only cropping to the initial block of upsampled pixel values 1410 for frame t-1 in step S406 to determine the aligned block of upsampled pixel values 1412. As such, in step S408 the realignment logic 516 applies only padding to determine a block of refinement values 1416 for frame t-1. In particular, padding is performed to add a row and a column of refinement values to the bottom and to the left of the block of refinement values output from the depth-to-space logic 514 (as shown by the row and column of refinement value locations 1418 with cross-hatching). The added refinement values 1418 could have any suitable value, e.g. they could be zero. The block of refinement values 1416 for frame t-1 is aligned with the initial block of upsampled pixel values 1410 for frame t-1. In other words, the positions of the refinement values in the block of refinement values 1416 correspond to the positions of the upsampled pixel values to which they are to be applied in the initial block of upsampled pixel values 1410. For example, the block of refinement values 1416 for frame t-1 has refinement values (shown with diagonal hatching) to be applied to input pixel values at the same positions as the locations of those input pixel values in the aligned block of upsampled pixel values 1410.

Similarly, as described above in relation to Figure 14, the alignment logic 508 applied only cropping to the initial block of upsampled pixel values 1420 for frame t-2 in step S406 to determine the aligned block of upsampled pixel values 1422. As such, in step S408 the realignment logic 516 applies only padding to determine a block of refinement values 1426 for frame t-2. In particular, padding is performed to add a row and a column of refinement values to the top and to the right of the block of refinement values output from the depth-to-space logic 514 (as shown by the row and column of refinement value locations 1428 with cross-hatching). The added refinement values 1428 could have any suitable value, e.g. they could be zero. The block of refinement values 1426 for frame t-2 is aligned with the initial block of upsampled pixel values 1420 for frame t-2. In other words, the positions of the refinement values in the block of refinement values 1426 correspond to the positions of the upsampled pixel values to which they are to be applied in the initial block of upsampled pixel values 1420. For example, the block of refinement values 1426 for frame t-2 has refinement values (shown with diagonal hatching) to be applied to input pixel values at the same positions as the locations of those input pixel values in the aligned block of upsampled pixel values 1420.

Similarly, as described above in relation to Figure 14, the alignment logic 508 applied only cropping to the initial block of upsampled pixel values 1430 for frame t-3 in step S406 to determine the aligned block of upsampled pixel values 1432. As such, in step S408 the realignment logic 516 applies only padding to determine a block of refinement values 1436 for frame t-3. In particular, padding is performed to add a row and a column of refinement values to the top and to the left of the block of refinement values output from the depth-to-space logic 514 (as shown by the row and column of refinement value locations 1438 with cross-hatching). The added refinement values 1438 could have any suitable value, e.g. they could be zero. The block of refinement values 1436 for frame t-3 is aligned with the initial block of upsampled pixel values 1430 for frame t-3. In other words, the positions of the refinement values in the block of refinement values 1436 correspond to the positions of the upsampled pixel values to which they are to be applied in the initial block of upsampled pixel values 1430. For example, the block of refinement values 1436 for frame t-3 has refinement values (shown with diagonal hatching) to be applied to input pixel values at the same positions as the locations of those input pixel values in the aligned block of upsampled pixel values 1430.

In the examples shown in Figures 12, 13 and 14, each of the blocks of refinement values is the same size and shape as the initial block of upsampled pixel values to which it is going to be applied. For simplicity of illustration, in the examples shown in Figures 12, 13 and 14 the initial blocks of upsampled pixel values and the blocks of refinement values are 10x10 blocks, but in other examples the blocks could be other shapes and/or sizes. In particular, the blocks may be much larger than 10x10 in practical applications. The blocks may represent the whole frames. That is, the number and the arrangement of the values in the blocks may be the same as the number and the arrangement of the upsampled pixel values in each of the frames. For example, the initial blocks of upsampled pixel values and the blocks of refinement values may be 1920x1080 blocks if the method is being used to produce a high definition image which is represented with a 1920x1080 array of pixels. In the example shown in Figure 12 the aligned blocks of upsampled pixel values are the same size and shape as the initial blocks of upsampled pixel values and the blocks of refinement values. In the example shown in Figure 13 the aligned blocks of upsampled pixel values have one more row and one more column of values compared to the initial blocks of upsampled pixel values and the blocks of refinement values. In the example shown in Figure 14 the aligned blocks of upsampled pixel values have one fewer row and one fewer column of values compared to the initial blocks of upsampled pixel values and the blocks of refinement values.

In examples described above, the space-to-depth and the depth-to-space processes are performed on the inputs and outputs from the set of one or more neural networks. In other examples, rather than performing the space-to-depth and depth-to-space processes, the processing, in step S408, of the aligned block of upsampled pixel values output from the alignment logic may comprise: (i) performing a convolution (e.g. a stride-2 convolution) on the aligned block of upsampled pixel values, (ii) processing a result of performing the convolution on the aligned block of upsampled pixel values with the set of one or more neural networks 512 to determine a block of neural network output values, and (iii) performing a deconvolution (e.g. a stride-2 deconvolution) on the neural network output values to determine the block of refinement values, which can then be passed to the realignment logic 508. "Deconvolution" may also be referred to as a "transposed convolution". The strides of the convolution and deconvolution are equal to the size of the $n$ x $m$ sub-blocks: that is, in general they may be a stride $(n, m)$ convolution and a stride $(n, m)$ deconvolution.

In the examples in which the space-to-depth and depth-to-space processes are performed, and in the examples in which the convolution and deconvolution processes are performed, the set of one or more neural networks 512 applies the same weights to the same types of upsampled pixel values of the aligned blocks. In other words, due to the alignment of the upsampled pixel values in the aligned blocks for different frames, the set of one or more neural networks 512 applies the same weights to the same positions relative to the jitter pattern for all of the frames.

In some examples, the padding and/or cropping can be implemented implicitly via offset sampling and/or offset writing. For example, the starting point of the first convolution layer in the network(s) may be offset, in the case that there is not an explicit space-to-depth process. Alternatively, if there is an explicit space-to-depth process then the sampling may be offset in the space-to-depth operation. In both cases, the effect of applying padding can be produced by returning a zero or the nearest edge sample value for any out-of-bounds samples (similar to when padding is explicitly performed). Similarly, offset writing can be used to produce the same effect as applying cropping, wherein cropped output pixels are not written in this case.

In step S410 the refinement module 306 (in particular the combining logic 518) applies the block of refinement values to the initial block of upsampled pixel values for the current frame to determine a refined block of upsampled pixel values for the current frame. The combining logic 518 may be an adder. For example, the refinement values may be delta values which represent values to be added to the corresponding upsampled pixel values of the initial block to determine the upsampled pixel values of the refined block. The delta values may be positive, zero or negative. In these examples, step S410 comprises adding the refinement values of the block of refinement values to the upsampled pixel values at corresponding locations of the initial block of upsampled pixel values. The refinement values to be applied to input pixel values of the initial block may tend to be smaller in magnitude than the refinement values to be applied to upsampled pixel values which are not input pixel values in the initial block. For example, the refinement values to be applied to input pixel values of the initial block may be zero.

In step S412 the refinement module 306 outputs the determined refined block of upsampled pixel values for the current frame, e.g. for use in implementing a super resolution technique. The refined block of upsampled pixel values may or may not be outputted from the processing system 302. The outputted upsampled pixel values of the refined block may be used in any suitable way, e.g. displayed on a display, stored in a memory or transmitted to another device over a network such as the internet. Furthermore, the refined blocks of upsampled pixel values outputted from the refinement module 306 may be passed to the processing module 304. In this way, in examples which implement temporal resampling in step S404, the refined block of upsampled pixel values that is determined for the current frame can be used (as a reference frame) by the processing module 304 in step S404 for determining upsampled pixel values for the frame immediately following the current frame in the sequence of frames.

In step S414 the processing system determines whether there is another frame in the sequence of frames to be processed. If there is another frame in the sequence of frames to be processed then the next frame in the sequence is set to be the 'current frame' and the method passes back to step S402. In this way the method is performed for each of a plurality of the frames of the sequence of frames, when it is a current frame. The processing system 302 may determine upsampled pixel values for all of the frames of the sequence of frames.

If it is determined in step S414 that there is not another frame in the sequence of frames to be processed then the method ends at S416.

Each of the one or more neural networks in the set 512 may be a convolutional neural network.

In some examples, the set of one or more neural networks 512 is a single neural network.

In other examples, the set of one or more neural networks 512 comprises a plurality of neural networks. In an example shown in Figure 16, the set of one or more neural networks 512 comprises a first neural network 1602, a second neural network 1604 and combination logic 1606. The inputs and outputs of the first and second neural networks 1602 and 1604 are connected to each other as shown in Figure 16. In particular, the first and second neural networks 1602 and 1604 share the same input and their outputs are combined by the combination logic 1606. The first neural network 1602 may be smaller than the second neural network. Furthermore, the combination of the first and second neural networks may be smaller than the single neural network in the examples in which the set of one or more neural networks is a single neural network. In this context "smaller" may mean that the neural network applies fewer weights to the input values, that the weights are represented with fewer bits and/or that the neural network has fewer layers. In these examples, step S408 comprises: (i) processing the aligned block of upsampled pixel values for the current frame using the first neural network 1602 to determine a block of initial refinement values, (ii) processing the aligned block of upsampled pixel values for the current frame using the second neural network 1604 to determine a block of fine refinement values to be applied to the block of initial refinement values, and (iii) applying the block of fine refinement values to the block of initial refinement values to determine the block of refinement values to be applied to the initial block of upsampled pixel values for the current frame. The initial refinement values provide a coarse approximation of the block of refinement values, which are then refined by the fine refinement values. Step (iii) of applying the block of fine refinement values to the block of initial refinement values may comprise adding the fine refinement values of the block of fine refinement values to the refinement values of the block of initial refinement values using the combination logic 1606. The combination logic 1606 may be implemented as an adder.

In examples described herein, the set of one or more neural networks 512 have been trained based on training blocks of upsampled pixel values having input pixel values located in the same positions within the training blocks as the input pixel values are located within the aligned blocks of upsampled pixel values. For example, if the alignment logic 508 applies cropping and padding as shown in Figure 12 then the set of one or more neural networks 512 may be trained using training blocks of upsampled pixel values having input pixel values located in the positions shown with diagonal hatching in the aligned blocks 1200, 1212, 1222 and 1232. If the alignment logic 508 applies padding (but not cropping) as shown in Figure 13 then the set of one or more neural networks 512 may be trained using training blocks of upsampled pixel values having input pixel values located in the positions shown with diagonal hatching in the aligned blocks 1302, 1312, 1322 and 1332. If the alignment logic 508 applies cropping (but not padding) as shown in Figure 14 then the set of one or more neural networks 512 may be trained using training blocks of upsampled pixel values having input pixel values located in the positions shown with diagonal hatching in the aligned blocks 1402, 1412, 1422 and 1432.

The training of the set of one or more neural networks 512 comprises, for each of a plurality of the training blocks of upsampled pixel values: (i) processing the training block of upsampled pixel values using the set of one or more neural networks 512 to determine a training block of refinement values to be applied to the training block of upsampled pixel values, (ii) applying the training block of refinement values to the training block of upsampled pixel values to determine a refined training block of upsampled pixel values, and (iii) comparing the refined training block of upsampled pixel values with a ground truth block of upsampled pixel values corresponding to the training block of upsampled pixel values to determine errors in the refined training block of upsampled pixel values. The determined errors are used in a back-propagation process to update one or more parameters (e.g. weights) of the set of one or more neural networks 512. A person skilled in the art would be aware of methods for training neural networks. The same training techniques can be used irrespective of whether the set of one or more neural networks comprises a single neural network or multiple neural networks.

As described above, the characteristics of optimal refinements to be applied to the input pixel values of the initial blocks may be significantly different to the characteristics of optimal refinements to be applied to the other upsampled pixel values in the initial blocks. However, due to the jitter pattern that is used over the sequence of frames, the initial blocks of upsampled pixel values for different frames include input pixel values at different locations. In examples described above, the initial blocks of upsampled pixel values are manipulated in accordance with the jitter pattern to determine aligned blocks of upsampled pixel values, such that the input pixel values are located in the same positions within the aligned blocks of upsampled pixel values for all of the frames. Since the aligned blocks of upsampled pixel values have the input pixel values located in the same positions for all of the frames, the neural network(s) applies the same weights to the input values in all of the frames, so the neural network(s) can be trained to process the aligned blocks of upsampled pixel values more optimally than they could be trained to process the initial blocks of upsampled pixel values. That is, the neural network(s) can be trained to process the input pixel values differently to the other upsampled pixel values. In particular, the neural networks can be trained to apply suitable processing to the input pixel values and suitable processing to the other upsampled pixel values in the aligned blocks of upsampled pixel values in accordance with their different characteristics. As such, by configuring the processing system so that the neural network(s) process the aligned blocks of upsampled pixel values, rather than the initial blocks of upsampled pixel values, the resulting refined upsampled pixel values can be of a higher quality (i.e. have a higher level of plausibility given the low resolution input images). This is achieved without significantly increasing the complexity, latency, power consumption or silicon area of the processing system.

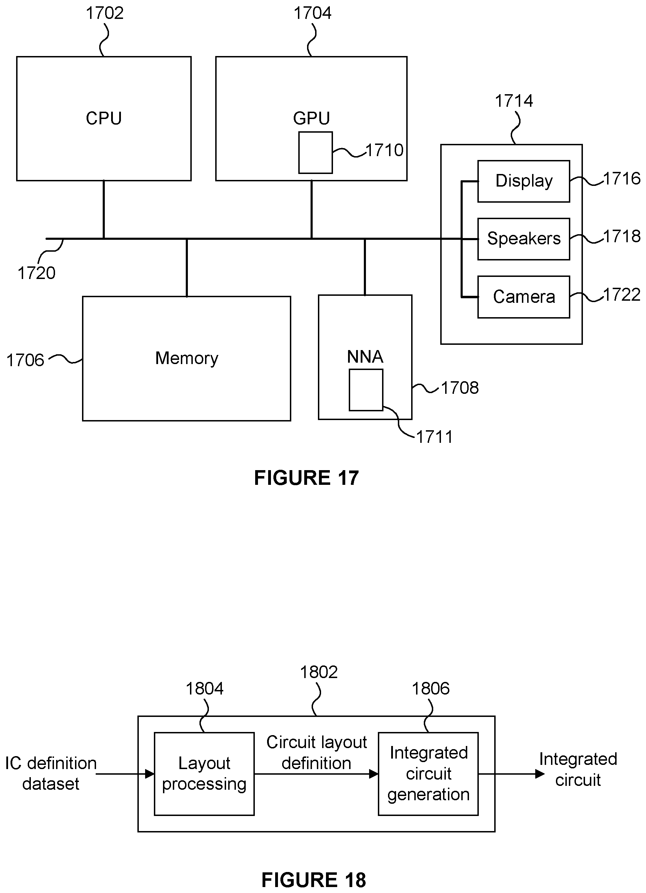

Figure 17 shows a computer system in which the processing systems described herein may be implemented. The computer system comprises a CPU 1702, a GPU 1704, a memory 1706, a neural network accelerator (NNA) 1708 and other devices 1714, such as a display 1716, speakers 1718 and a camera 1722. A processing block 1710 (corresponding to the processing module 304 described herein) is implemented on the GPU 1704. A processing block 1711 (corresponding to the refinement module 306 described herein) is implemented on the NNA 1708. In other examples, one or more of the depicted components may be omitted from the system, and/or the processing block 1710 may be implemented on the CPU 1702 or within the NNA 1708 or in a separate block in the computer system. Furthermore, the processing block 1711 may be implemented on the CPU 1702 or within the GPU 1704 or in a separate block in the computer system. The components of the computer system can communicate with each other via a communications bus 1720.

The processing systems described herein are shown as comprising a number of functional blocks. This is schematic only and is not intended to define a strict division between different logic elements of such entities. Each functional block may be provided in any suitable manner. It is to be understood that intermediate values described herein as being formed by a processing system need not be physically generated by the processing system at any point and may merely represent logical values which conveniently describe the processing performed by the processing system between its input and output.

The processing systems described herein may be embodied in hardware on an integrated circuit. The processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an applicationspecific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing system configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processing system as described herein. Furthermore, there may be provided an integrated circuit definition dataset that, when processed in an integrated circuit manufacturing system, causes the method of manufacturing a processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing system will now be described with respect to Figure 18.

Figure 18 shows an example of an integrated circuit (IC) manufacturing system 1802 which is configured to manufacture a processing system as described in any of the examples herein. In particular, the IC manufacturing system 1802 comprises a layout processing system 1804 and an integrated circuit generation system 1806. The IC manufacturing system 1802 is configured to receive an IC definition dataset (e.g. defining a processing system as described in any of the examples herein), process the IC definition dataset, and generate an IC according to the IC definition dataset (e.g. which embodies a processing system as described in any of the examples herein). The processing of the IC definition dataset configures the IC manufacturing system 1802 to manufacture an integrated circuit embodying a processing system as described in any of the examples herein.

The layout processing system 1804 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1804 has determined the circuit layout it may output a circuit layout definition to the IC generation system 1806. A circuit layout definition may be, for example, a circuit layout description.

The IC generation system 1806 generates an IC according to the circuit layout definition, as is known in the art. For example, the IC generation system 1806 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1806 may be in the form of computer-readable code which the IC generation system 1806 can use to form a suitable mask for use in generating an IC.

The different processes performed by the IC manufacturing system 1802 may be implemented all in one location, e.g. by one party. Alternatively, the IC manufacturing system 1802 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 18 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 18, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A method of applying upsampling to input pixel values of frames of a sequence of frames to determine upsampled pixel values at upsampled pixel locations for the frames of the sequence of frames, wherein a jitter pattern is used over the sequence of frames, such that different frames of the sequence have input pixel values at locations corresponding to different upsampled pixel locations, the method comprising:

for each of a plurality of the frames of the sequence of frames, when it is a current frame:

receiving input pixel values of the current frame;
determining an initial block of upsampled pixel values for the current frame,

wherein the initial block of upsampled pixel values for the current frame comprises: (i) the input pixel values of the current frame at their upsampled pixel locations, and (ii) upsampled pixel values determined for the current frame at other upsampled pixel locations;

determining an aligned block of upsampled pixel values for the current frame based on the initial block of upsampled pixel values for the current frame in accordance with the jitter pattern;
determining a block of refinement values to be applied to the initial block of upsampled pixel values for the current frame, wherein said determining a block of refinement values comprises processing the aligned block of upsampled pixel values for the current frame using a set of one or more neural networks; and
applying the block of refinement values to the initial block of upsampled pixel values for the current frame to determine a refined block of upsampled pixel values for the current frame;

wherein for one or more of the plurality of the frames of the sequence of frames, said determining an aligned block of upsampled pixel values comprises manipulating the initial block of upsampled pixel values for that frame in accordance with the jitter pattern, such that the input pixel values are located in the same positions within the aligned blocks of upsampled pixel values for all of the plurality of frames.

2. The method of claim 1 wherein said manipulating the initial block of upsampled pixel values comprises applying one or both of padding and cropping to the initial block of upsampled pixel values.

3. The method of claim 2 wherein for one or more of the plurality of the frames of the sequence of frames, said applying one or both of padding and cropping to the initial block of upsampled pixel values for that frame comprises:

applying both padding and cropping to the initial block of upsampled pixel values for that frame; or
applying only a first one of padding and cropping to the initial block of upsampled pixel values for that frame to determine the aligned block of upsampled pixel values for that frame, and wherein said determining a block of refinement values comprises applying a second one of padding and cropping to a result of processing the aligned block of upsampled pixel values for that frame using the set of one or more neural networks, wherein the first and second ones of padding and cropping are different.

4. The method of claims 2 or 3 wherein said applying padding to an initial block of upsampled pixel values comprises adding a row and/or a column of upsampled pixel locations to the initial block of upsampled pixel values, and optionally wherein the values at the added row and/or a column of upsampled pixel locations are either zeros or copies of upsampled pixel values at an adjacent row and/or column of upsampled pixel locations in the initial block of upsampled pixel values.

5. The method of any of claims 2 to 4 wherein said applying cropping to an initial block of upsampled pixel values comprises removing a row and/or a column of upsampled pixel locations from the initial block of upsampled pixel values.

6. The method of any of claims 2 to 5 wherein for said one or more of the plurality of the frames of the sequence of frames, said determining a block of refinement values comprises manipulating a result of processing the aligned block of upsampled pixel values for that frame using the set of one or more neural networks, to counteract said manipulation of the initial block of upsampled pixel values that was performed when the aligned block of upsampled pixel values was determined for that frame, and optionally wherein said manipulating the result of processing the aligned block of upsampled pixel values for that frame comprises:
applying one or both of padding and cropping to the result of processing the aligned block of upsampled pixel values for that frame using the set of one or more neural networks, to counteract the one or both of padding and cropping that was applied when the aligned block of upsampled pixel values was determined for that frame.

7. The method of any preceding claim wherein for each of the plurality of the frames of the sequence of frames, each 2x2 sub-block of upsampled pixel values in the initial block of upsampled pixel values comprises one input pixel value and three other upsampled pixel values, and each 2x2 sub-block of upsampled pixel values in the aligned block of upsampled pixel values comprises one input pixel value and three other upsampled pixel values,

wherein, in accordance with the jitter pattern, the positions of the input pixel values within the 2x2 sub-blocks of upsampled pixel values in the initial block of upsampled pixel values are different for different frames of the plurality of frames, and
wherein said manipulating the initial block of upsampled pixel values is performed so that the positions of the input pixel values within the 2x2 sub-blocks of upsampled pixel values in the aligned block of upsampled pixel values are the same for all of the frames of the plurality of frames.

8. The method of any preceding claim wherein said processing the aligned block of upsampled pixel values comprises:

performing a space-to-depth process to divide the upsampled pixel values of the aligned block into a plurality of channels, wherein the input pixel values of the aligned block are grouped into a single one of the plurality of channels, and the upsampled pixel values of the aligned block which are not input pixel values are grouped into one or more other channels of the plurality of channels;
processing the upsampled pixel values of the aligned block in the plurality of channels with the set of one or more neural networks to determine a block of neural network output values in the plurality of channels; and
performing a depth-to-space process to interleave the neural network output values from the plurality of channels back into a single channel.

9. The method of any of claims 1 to 7 wherein said processing the aligned block of upsampled pixel values comprises:

performing a convolution on the aligned block of upsampled pixel values;
processing a result of performing the convolution on the aligned block of upsampled pixel values with the set of one or more neural networks to determine a block of neural network output values; and
performing a deconvolution on the neural network output values to determine the block of refinement values.

10. The method of any preceding claim wherein the refinement values are delta values, and wherein said applying the block of refinement values to the initial block of upsampled pixel values comprises adding the refinement values of the block of refinement values to the upsampled pixel values at corresponding locations of the initial block of upsampled pixel values.

11. The method of any preceding claim wherein the set of one or more neural networks has been trained based on training blocks of upsampled pixel values having input pixel values located in said same positions within the training blocks, and optionally wherein the set of one or more neural networks has been trained by:

for each of a plurality of the training blocks of upsampled pixel values:

processing the training block of upsampled pixel values using the set of one or more neural networks to determine a training block of refinement values to be applied to the training block of upsampled pixel values;

applying the training block of refinement values to the training block of upsampled pixel values to determine a refined training block of upsampled pixel values; and

comparing the refined training block of upsampled pixel values with a ground truth block of upsampled pixel values corresponding to the training block of upsampled pixel values to determine errors in the refined training block of upsampled pixel values;

wherein the determined errors are used in a back-propagation process to update one or more parameters of the set of one or more neural networks.

12. The method of any preceding claim wherein said determining an initial block of upsampled pixel values for the current frame comprises determining said upsampled pixel values for the current frame at said other upsampled pixel locations and wherein said determining said upsampled pixel values for the current frame at said other upsampled pixel locations comprises:

obtaining pixel values of pixels of a reference frame of the sequence of frames;

for each of said other upsampled pixel locations:

obtaining a motion vector for the upsampled pixel location to indicate motion between the reference frame and the current frame for the upsampled pixel location;

using the motion vector for the upsampled pixel location to identify a plurality of the pixels of the reference frame;

determining a weight for each of the identified pixels of the reference frame; and

determining the upsampled pixel value for the upsampled pixel location using the determined weight for each of the identified pixels.

13. A processing system configured to perform the method of any of claims 1 to 12.

14. Computer readable code configured to cause the method of any of claims 1 to 12 to be performed when the code is run.

15. A computer readable storage medium having stored thereon an integrated circuit definition dataset that, when processed in an integrated circuit manufacturing system, configures the integrated circuit manufacturing system to manufacture a processing system as claimed in claim 13.

FIGURE 1

FIGURE 2a

FIGURE 2b

FIGURE 2c

FIGURE 2d

Processing system

302

304

Input pixel
values

Processing
module

Initial blocks of
upsampled
pixel values

306

Refinement
module

Refined blocks
of upsampled
pixel values

## FIGURE 3

Receive input pixel values of a current frame — S402

Determine an initial block of upsampled pixel values for
the current frame — S404

Determine an aligned block of upsampled pixel values
for the current frame — S406

Determine a block of refinement values to be applied to
the initial block of upsampled pixel values for the current
frame — S408

Apply the block of refinement values to the initial block of
upsampled pixel values for the current frame to
determine a refined block of upsampled pixel values for
the current frame — S410

Output the refined block of upsampled pixel values for
the current frame — S412

Set the next frame in the sequence to be the 'current frame'

S416

S414

Yes    Is there another frame in the sequence
of frames?    No    End

## FIGURE 4

FIGURE 5

FIGURE 6

EP 4 675 550 A1

From step S402                    S404

Obtain pixel values and depth values for pixels of a
reference frame                                          S702

Obtain depth values for the current frame               S704

Obtain a motion vector for an upsampled pixel location  S706

Use the motion vector for the upsampled pixel location to
identify a plurality of the pixels of the reference frame   S708

Determine one or more moments for locations of the
current frame in a region surrounding the upsampled
pixel location                                           S710

Determine a weight for each of the identified pixels of the
reference frame                                          S712

                                                         S711

Determine the upsampled pixel value for the upsampled
pixel location using the determined weights             S714

Next upsampled pixel location

Yes    Is there another upsampled pixel
            location?                                    S716

                    No

To step S406

**FIGURE 7**

FIGURE 8

FIGURE 9

Clamped upsampled pixel value

**FIGURE 10**

Ground truth

Upsampled with history rectification

Upsampled without history rectification

$1110_{GT}$    $1108_{GT}$    $1110_{HR}$    $1108_{HR}$    $1110_{NHR}$    $1108_{NHR}$

1102      1104      1106

**FIGURE 11**

Frame t

1200

1210
Frame t-1 1214

1216 1212

Pad & crop

Process with NN then pad & crop

1219 1218

1220
Frame t-2 1226

1222

Pad & crop

1224

Process with NN then pad & crop

1229 1228

1230
Frame t-3 1236

1232

Pad & crop

1234

Process with NN then pad & crop

1239 1238

**FIGURE 12**

**FIGURE 13**

**FIGURE 14**

1502

1506  1504  1508

Space to
depth

1510  1512

**FIGURE 15a**

1526  1522  1528

1524

Depth to
space

1530  1532

**FIGURE 15b**

512

First neural
network

1602

1606

+

Second neural
network

1604

**FIGURE 16**

**FIGURE 17**

**FIGURE 18**

Europäisches
Patentamt

European
Patent Office

Office européen
des brevets

## EUROPEAN SEARCH REPORT

**Application Number**

EP 25 18 5777

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RYAN S PRENDERGAST ET AL: "A block-based super-resolution for video sequences", 15TH IEEE INTERNATIONAL CONFERENCE ON IMAGE PROCESSING : ICIP 2008 ; SAN DIEGO, CALIFORNIA, USA, 12 - 15 OCTOBER 2008, IEEE, PISCATAWAY, NJ, USA, 12 October 2008 (2008-10-12), pages 1240-1243, XP031374233, ISBN: 978-1-4244-1765-0 * section 3; page 1241 * * abstract * | 1-15 | INV. G06T3/4053 |
| A | DONG CHAO ET AL: "Image Super-Resolution Using Deep Convolutional Networks", IEEE TRANSACTIONS ON PATTERN ANALYSIS AND MACHINE INTELLIGENCE, IEEE COMPUTER SOCIETY, USA, vol. 38, no. 2, 1 February 2016 (2016-02-01), pages 295-307, XP011591233, ISSN: 0162-8828, DOI: 10.1109/TPAMI.2015.2439281 [retrieved on 2016-01-07] * the whole document * | 1-15 | |
| A | WRONSKI BARTLOMIEJ BWRONSKI@GOOGLE COM ET AL: "Handheld multi-frame super-resolution", ACM TRANSACTIONS ON GRAPHICS, ACM, NY, US, vol. 38, no. 4, 12 July 2019 (2019-07-12), pages 1-18, XP058452129, ISSN: 0730-0301, DOI: 10.1145/3306346.3323024 * the whole document * | 1-15 | |

TECHNICAL FIELDS SEARCHED (IPC)

G06T

-/--

The present search report has been drawn up for all claims

| Place of search | Date of completion of the search | Examiner |
|---|---|---|
| Munich | 21 October 2025 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 18 5777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHARMILA T.: "Image Upscaling based Convolutional Neural Network for Better Reconstruction Quality", , [Online] 2016, pages 1-5, XP093325133, Retrieved from the Internet: URL:https://ieeexplore.ieee.org/stamp/stamp.jsp?tp=&arnumber=7754236> [retrieved on 2025-10-14] * the whole document * ----- | 1-15 | |
|  |  |  | TECHNICAL FIELDS SEARCHED (IPC) |

The present search report has been drawn up for all claims

| Place of search | Date of completion of the search | Examiner |
|---|---|---|
| Munich | 21 October 2025 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2409480 A